(19) Europäisches Patentamt
European Patent Office
Office européen des brevets

(11) EP 4 686 301 A1

(12) **EUROPEAN PATENT APPLICATION**
published in accordance with Art. 153(4) EPC

(43) Date of publication:
**28.01.2026 Bulletin 2026/05**

(21) Application number: **23929271.7**

(22) Date of filing: **29.03.2023**

(51) International Patent Classification (IPC):
***H04W 72/542*** *(2023.01)*

(52) Cooperative Patent Classification (CPC):
**H04W 72/542**

(86) International application number:
**PCT/CN2023/084897**

(87) International publication number:
**WO 2024/197673 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **LIU, Yong**
  **Shenzhen, Guangdong 518129 (CN)**
- **ZHANG, Weile**
  **Xi'an, Shaanxi 710049 (CN)**
- **YAN, Zeyu**
  **Xi'an, Shaanxi 710049 (CN)**
- **XU, Jing**
  **Xi'an, Shaanxi 710049 (CN)**
- **JIANG, Yisheng**
  **Shenzhen, Guangdong 518129 (CN)**
- **FU, Jinshu**
  **Shenzhen, Guangdong 518129 (CN)**
- **BI, Xiaoyan**
  **Shenzhen, Guangdong 518129 (CN)**

(74) Representative: **Isarpatent**
**Patent- und Rechtsanwälte Partg mbB**
**Friedrichstraße 31**
**80801 München (DE)**

(54) **REFERENCE SIGNAL TRANSMISSION METHOD AND COMMUNICATION APPARATUS**

(57) This application provides a reference signal transmission method and a communication apparatus. The method includes: A first communication apparatus determines a reference signal resource based on N pieces of channel characteristic information representing a channel between the first communication apparatus and a second communication apparatus and M pieces of energy scale information. Any piece of channel characteristic information indicates a correspondence between an energy component of the channel and a transmission resource, the reference signal resource includes a plurality of resource units in a transmission resource, and energy indicated by one or more pieces of energy scale information in correspondences indicated by one or more pieces of channel characteristic information corresponds to one resource unit; the first communication apparatus sends, to the second communication apparatus, first information including at least one piece of energy scale information; and the first communication apparatus and the second communication apparatus transmit a reference signal on the reference signal resource. In this way, channel estimation precision and resource utilization can be improved.

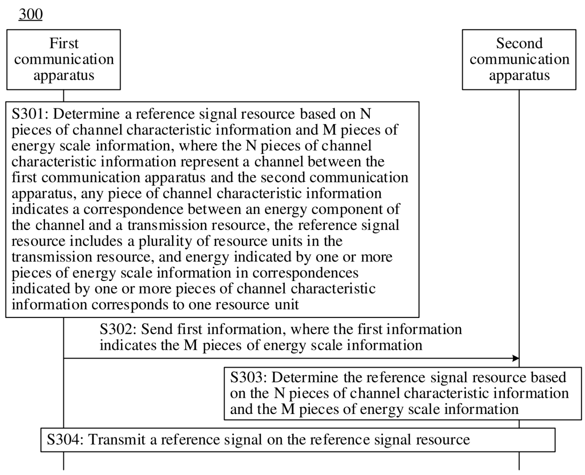


FIG. 3

EP 4 686 301 A1

## Description

### TECHNICAL FIELD

This application relates to the communication field, and more specifically, to a reference signal transmission method and a communication apparatus.

### BACKGROUND

In a wireless communication network, by transmitting a reference signal, two communication devices may obtain, through measurement and estimation, a state of a channel between the two communication devices, to determine precoding used for data transmission, and reduce impact of channel fading during data transmission. Accuracy of the channel state obtained by the communication apparatus directly affects data transmission reliability. Distribution of reference signals determines accuracy of the channel state obtained by the communication device.

Currently, reference signals are mainly transmitted in a manner in which reference signals are evenly distributed in time domain and/or frequency domain. However, with wide application of wireless communication, a requirement for channel estimation precision is increasingly high. However, a current reference signal transmission manner is not flexible enough, and cannot meet a development requirement of wireless communication.

### SUMMARY

Embodiments of this application provide a reference signal transmission method and a communication apparatus to improve channel estimation precision and resource utilization.

According to a first aspect, a reference signal transmission method is provided. The method may be performed by a communication apparatus. The communication apparatus may be a communication device or a component (for example, a chip or a chip system) configured in a communication device that performs the method. An example in which a first communication apparatus performs the method is used below for description.

The method includes: The first communication apparatus determines a reference signal resource based on at least one piece of channel characteristic information and at least one piece of energy scale information, where the at least one piece of channel characteristic information represents a channel between the first communication apparatus and a second communication apparatus, any piece of channel characteristic information indicates a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit; the first communication apparatus sends first information to the second communication apparatus, where the first information indicates the at least one piece of energy scale information; and the first communication apparatus sends a reference signal to the second communication apparatus, or the first communication apparatus receives a reference signal from the second communication apparatus, where the reference signal is carried on the reference signal resource.

It should be understood that, in this application, "sending information/a signal" only indicates a direction of information/signal transmission, including direct sending through an air interface, and also including indirect sending by a processing unit through the air interface. Therefore, "sending" may also be understood as "output" of a chip interface. Similarly, "receiving information/a signal" only indicates a direction of information/signal transmission, including direct reception through the air interface and indirect reception by the processing unit through the air interface. Therefore, "receiving" may also be understood as "input" of the chip interface.

According to the foregoing solution, compared with a conventional fixed configuration of evenly distributed reference signal resources, the first communication apparatus may flexibly adjust, based on a channel characteristic, a distribution of reference signals used for channel estimation between the first communication apparatus and the second communication apparatus, so that channel estimation precision and resource utilization can be improved, and channel estimation in a relatively high-precision mobility scenario can be implemented by using relatively proper reference signal resource overheads matching an environment. In addition, reference signal resources determined by using the foregoing solution in this application may be unevenly distributed. The first communication apparatus and the second communication apparatus determine a reference signal resource in a same manner by exchanging energy scale information to reach a consensus on the reference signal resource, implementing high-precision and efficient channel estimation.

With reference to the first aspect, in some implementations of the first aspect, the transmission resource is a time domain resource and/or a frequency domain resource.

With reference to the first aspect, in some implementations of the first aspect, that the first communication apparatus determines the reference signal resource based on the at least one piece of channel characteristic information and the at least one piece of energy scale information includes: The first communication apparatus determines the

reference signal resource based on the at least one piece of channel characteristic information, the at least one piece of energy scale information, and minimum resource interval information. An interval between any two resource units in the reference signal resource is greater than or equal to an interval indicated by the minimum resource interval information.

According to the foregoing solution, channel characteristics corresponding to similar resource units are similar. Therefore, a minimum resource interval is set to select a resource unit meeting a requirement, so that an interval between any two resource units in the reference signal resource determined by the first communication apparatus is greater than or equal to the minimum resource interval. In this way, unnecessary reference signal resource overheads can be reduced.

With reference to the first aspect, in some implementations of the first aspect, the minimum resource interval information is predefined or is determined by the first communication apparatus.

With reference to the first aspect, in some implementations of the first aspect, the method further includes: The first communication apparatus sends second information to the second communication apparatus, where the second information indicates the at least one piece of channel characteristic information.

According to the foregoing solution, the first communication apparatus further notifies the second communication apparatus of the at least one piece of channel characteristic information used to determine the reference signal resource, so that reference signal resources determined by the first communication apparatus and the second communication apparatus based on the same channel characteristic information and energy scale information are the same. Therefore, the two communication apparatuses reach a consensus on the reference signal resource for transmitting the reference signal, so that the reference signal is reliably transmitted. It should be understood that this application is not limited thereto. The at least one piece of channel characteristic information used to determine the reference signal resource may be predefined, determined in a predefined manner, or transferred by another communication apparatus (for example, a third communication apparatus) to the first communication apparatus and/or the second communication apparatus.

With reference to the first aspect, in some implementations of the first aspect, the channel characteristic information indicates information about a basis function representing the correspondence, and the information about the basis function includes one or more of the following information:

an identifier of the basis function, function type information of the basis function, resource information corresponding to maximum energy in the correspondence represented by the basis function, frequency information of the basis function, or fading characteristic information of the basis function.

According to the foregoing solution, the channel characteristic information may specifically indicate the information about the basis function, so that the second communication apparatus can determine, based on the channel characteristic information, at least one basis function representing the channel, to determine the reference signal resource based on the at least one basis function and the at least one piece of energy scale information.

With reference to the first aspect, in some implementations of the first aspect, the method further includes: The first communication apparatus receives third information from the second communication apparatus, where the third information indicates one or more of a location, a speed, or a moving direction of the second communication apparatus; and the first communication apparatus determines the at least one piece of channel characteristic information based on the third information.

According to the foregoing solution, the first communication apparatus may determine, based on sensing information (for example, one or more of the location, the speed, or the moving direction) obtained from the second communication apparatus, the at least one piece of channel characteristic information representing the channel, so that the at least one piece of channel characteristic information can more precisely represent the channel between the first communication apparatus and the second communication apparatus.

With reference to the first aspect, in some implementations of the first aspect, the method further includes: The first communication apparatus determines a candidate channel characteristic information set based on one or more of channel state information between a plurality of communication apparatuses and the first communication apparatus, and location information, speed information, or moving direction information of the plurality of communication apparatuses, where the candidate channel characteristic information set includes the at least one piece of channel characteristic information.

According to the foregoing solution, the first communication apparatus may fit, based on the historical prior information, a channel characteristic in an environment in which the first communication apparatus is located, to obtain the candidate channel characteristic information set, so that the first communication apparatus implements channel modeling on the environment in which the first communication apparatus is located and adjusts a model in real time based on an environment change. Therefore, channel characteristic information representing different communication apparatuses communicating with the first communication apparatus can be determined based on the channel model, to implement a reference signal resource design matching a speed and a location of the communication apparatus and an environment in which the communication apparatus is located, and implement channel estimation in a relatively high-precision mobility scenario. A manner for determining the candidate channel characteristic information set may be a manner of training a model in an artificial intelligence manner to obtain a channel model.

With reference to the first aspect, in some implementations of the first aspect, the transmission resource includes

a time domain resource, the channel includes at least one transmission path, and one piece of channel characteristic information indicates a correspondence between an energy component of the channel in the transmission path and a time resource.

According to the foregoing solution, when the transmission resource includes the time domain resource, different channel characteristic information may represent a change of the energy component of the channel in the transmission path, and a plurality of pieces of channel characteristic information can represent characteristics of a multi-path channel.

According to a second aspect, a reference signal transmission method is provided. The method may be performed by a communication apparatus. The communication apparatus may be a communication device or a component (for example, a chip or a chip system) configured in a communication device that performs the method. An example in which a second communication apparatus performs the method is used below for description.

The method includes: The second communication apparatus receives first information from a first communication apparatus, where the first information indicates at least one piece of energy scale information; the second communication apparatus determines a reference signal resource based on at least one piece of channel characteristic information and the at least one piece of energy scale information, where the at least one piece of channel characteristic information represents a channel between the first communication apparatus and the second communication apparatus, any piece of channel characteristic information represents a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit; and the second communication apparatus receives a reference signal from the first communication apparatus, or the second communication apparatus sends a reference signal to the first communication apparatus, where the reference signal is carried on the reference signal resource.

With reference to the second aspect, in some implementations of the second aspect, the transmission resource is a time domain resource and/or a frequency domain resource.

With reference to the second aspect, in some implementations of the second aspect, that the second communication apparatus determines the reference signal resource based on the at least one piece of channel characteristic information and the at least one piece of energy scale information includes: The second communication apparatus determines the reference signal resource based on the at least one piece of channel characteristic information, the at least one piece of energy scale information, and minimum resource interval information. An interval between any two resources in the reference signal resource is greater than or equal to an interval indicated by the minimum resource interval information.

With reference to the second aspect, in some implementations of the second aspect, the minimum resource interval information is predefined or is obtained from the first communication apparatus.

With reference to the second aspect, in some implementations of the second aspect, the method further includes: The second communication apparatus receives second information from the first communication apparatus, where the second information indicates the at least one piece of channel characteristic information.

With reference to the second aspect, in some implementations of the second aspect, the channel characteristic information indicates information about a basis function representing the correspondence, and the information about the basis function includes one or more of the following information:

an identifier of the basis function, function type information of the basis function, resource information corresponding to maximum energy in the correspondence represented by the basis function, frequency information of the basis function, or fading characteristic information of the basis function.

With reference to the second aspect, in some implementations of the second aspect, the method further includes: The second communication apparatus determines channel state feature information based on the reference signal, where the channel state feature information indicates a state of the channel corresponding to the reference signal; and the second communication apparatus determines channel information based on the channel state feature information and the at least one piece of channel characteristic information.

With reference to the second aspect, in some implementations of the second aspect, the method further includes: The second communication apparatus sends third information to the first communication apparatus, where the third information indicates one or more of a location, a speed, or a moving direction of the second communication apparatus, and the third information is used to determine the at least one piece of channel characteristic information.

With reference to the second aspect, in some implementations of the second aspect, the transmission resource includes a time domain resource, the channel includes at least one transmission path, and one piece of channel characteristic information indicates a correspondence between an energy component of the channel in the transmission path and a time resource.

According to a third aspect, a communication apparatus is provided. In a design, the apparatus may include modules in one-to-one correspondence with the method/operations/steps/actions described in any one of the first aspect or the implementations of the first aspect. The modules may be hardware circuits or software, or may be implemented by

hardware circuits in combination with software. In a design, the apparatus includes: a processing unit, configured to determine a reference signal resource based on at least one piece of channel characteristic information and at least one piece of energy scale information, where the at least one piece of channel characteristic information represents a channel between a first communication apparatus and a second communication apparatus, any piece of channel characteristic information indicates a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit; and a transceiver unit, configured to send first information to the second communication apparatus, where the first information indicates the at least one piece of energy scale information. The transceiver unit is further configured to: send a reference signal to the second communication apparatus, or receive, by the first communication apparatus, a reference signal from the second communication apparatus, where the reference signal is carried on the reference signal resource.

It should be understood that for specific implementations of the transmission resource, a minimum time interval, and the channel characteristic information in the third aspect, refer to the descriptions in the first aspect. Details are not described herein again.

With reference to the third aspect, in some implementations of the third aspect, the processing unit is specifically configured to determine the reference signal resource based on the at least one piece of channel characteristic information, the at least one piece of energy scale information, and the minimum resource interval information. An interval between any two resource units in the reference signal resource is greater than or equal to an interval indicated by the minimum resource interval information.

With reference to the third aspect, in some implementations of the third aspect, the transceiver unit is further configured to receive third information from the second communication apparatus, where the third information indicates one or more of a location, a speed, or a moving direction of the second communication apparatus. The processing unit is further configured to determine the at least one piece of channel characteristic information based on the third information.

With reference to the third aspect, in some implementations of the third aspect, the processing unit is further configured to determine a candidate channel characteristic information set based on one or more of channel state information between a plurality of communication apparatuses and the first communication apparatus, and location information, speed information, or moving direction information of the plurality of communication apparatuses, where the candidate channel characteristic information set includes the at least one piece of channel characteristic information.

According to a fourth aspect, a communication apparatus is provided. In a design, the apparatus may include modules in one-to-one correspondence with the method/operations/steps/actions described in any one of the second aspect or the implementations of the second aspect. The modules may be hardware circuits or software, or may be implemented by hardware circuits in combination with software. In a design, the apparatus includes: a transceiver unit, configured to receive first information from a first communication apparatus, where the first information indicates at least one piece of energy scale information; and a processing unit, configured to determine a reference signal resource based on at least one piece of channel characteristic information and the at least one piece of energy scale information, where the at least one piece of channel characteristic information represents a channel between the first communication apparatus and a second communication apparatus, any piece of channel characteristic information represents a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit. The transceiver unit is further configured to: receive a reference signal from the first communication apparatus, or send, by the second communication apparatus, a reference signal to the first communication apparatus, where the reference signal is carried on the reference signal resource.

It should be understood that for specific implementations of the transmission resource, a minimum time interval, and the channel characteristic information in the fourth aspect, refer to the descriptions in the second aspect. Details are not described herein again.

With reference to the fourth aspect, in some implementations of the fourth aspect, the processing unit is further configured to determine the reference signal resource based on the at least one piece of channel characteristic information, the at least one piece of energy scale information, and the minimum resource interval information. An interval between any two resources in the reference signal resource is greater than or equal to an interval indicated by the minimum resource interval information.

With reference to the fourth aspect, in some implementations of the fourth aspect, the transceiver unit is further configured to receive second information from the first communication apparatus, where the second information indicates the at least one piece of channel characteristic information.

With reference to the fourth aspect, in some implementations of the fourth aspect, the processing unit is further configured to determine channel state feature information based on the reference signal, where the channel state feature information indicates a state of the channel corresponding to the reference signal. Besides, the processing unit is further

configured to determine channel information based on the channel state feature information and the at least one piece of channel characteristic information.

With reference to the fourth aspect, in some implementations of the fourth aspect, the processing unit is further configured to determine a candidate channel characteristic information set based on one or more of channel state information between a plurality of communication apparatuses and the first communication apparatus, and location information, speed information, or moving direction information of the plurality of communication apparatuses, where the candidate channel characteristic information set includes the at least one piece of channel characteristic information.

According to a fifth aspect, a communication apparatus is provided, including a processor. The processor may implement the method according to any one of the first aspect or the possible implementations of the first aspect, or implement the method according to any one of the second aspect or the possible implementations of the second aspect. Optionally, the communication apparatus further includes a memory. The processor is coupled to the memory, and may be configured to execute instructions in the memory to implement the method according to any one of the first aspect or the possible implementations of the first aspect, or implement the method according to any one of the second aspect or the possible implementations of the second aspect. Optionally, the communication apparatus further includes a communication interface, and the processor is coupled to the communication interface. In this application, the communication interface may be a transceiver, a pin, a circuit, a bus, a module, or another type of communication interface. This is not limited.

In an implementation, the communication apparatus is a communication device (for example, the communication device may be a terminal device or a network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, including an input circuit, an output circuit, and a processing circuit. The processing circuit is configured to: receive a signal through the input circuit, and transmit a signal through the output circuit, so that the processor performs the method according to any one of the first aspect or the possible implementations of the first aspect, or performs the method according to any one of the second aspect or the possible implementations of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a seventh aspect, a computer program product is provided. The computer program product includes a computer program (which may also be referred to as code or instructions). When the computer program runs, a computer is enabled to perform the method according to any one of the first aspect or the possible implementations of the first aspect, or perform the method according to any one of the second aspect or the possible implementations of the second aspect.

According to an eighth aspect, a computer-readable storage medium is provided. The computer-readable storage medium stores a computer program (which may also be referred to as code or instructions). When the computer program runs on a computer, the computer is enabled to perform the method according to any one of the first aspect or the possible implementations of the first aspect, or perform the method according to any one of the second aspect or the possible implementations of the second aspect.

According to a ninth aspect, a communication system is provided, including at least one first communication apparatus described above and at least one second communication apparatus described above.

## BRIEF DESCRIPTION OF DRAWINGS

FIG. 1 is a schematic block diagram of a communication system applicable to an embodiment of this application;

FIG. 2 is a diagram of an application scenario according to an embodiment of this application;

FIG. 3 is a schematic flowchart of a reference signal transmission method according to an embodiment of this application;

FIG. 4 is a diagram of a basis function representing a channel according to an embodiment of this application;

FIG. 5 is a diagram of determining a reference signal resource according to an embodiment of this application;
FIG. 6 is a diagram of a structure of a communication apparatus according to this application; and
FIG. 7 is another diagram of a structure of a communication apparatus according to this application.

## DESCRIPTION OF EMBODIMENTS

The following describes technical solutions in this application with reference to the accompanying drawings.

In embodiments of this application, "/" may indicate an "or" relationship between associated objects. For example, A/B may indicate A or B, and "and/or" may indicate that there are three relationships between associated objects. For example, A and/or B may indicate the following three cases: Only A exists, both A and B exist, and only B exists, where A and B may be singular or plural. For ease of describing the technical solutions in embodiments of this application, words such as "first" and "second" may be used for differentiation in embodiments of this application. The words such as "first" and "second" do not limit a quantity and an execution sequence, and the words such as "first" and "second" do not limit a definite difference. In embodiments of this application, a term such as "example" or "for example" is used to represent an example, evidence, or a description. Any embodiment or design solution described as "example" or "for example" should not be explained as being more preferred or having more advantages than another embodiment or design solution. Use of the term such as "example" or "for example" is intended to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE), a 5G system, a new radio (new radio, NR), a non-terrestrial network (non-terrestrial networks, NTN), and a future communication system, for example, a $6^{th}$ generation mobile communication system. This is not limited in this application.

FIG. 1 is a diagram of an architecture of a communication system 100 applicable to an embodiment of this application. As shown in FIG. 1, the communication system 100 may include at least one network device (for example, 110a, 110b, and 110c in FIG. 1), and may further include at least one terminal device (for example, 120a to 120g in FIG. 1). Network devices may be connected to each other in a wired or wireless manner. FIG. 1 is merely a diagram. The communication system may further include another network device, for example, may further include a wireless relay device and a wireless backhaul device.

A first communication apparatus provided in embodiments of this application may be a network device, or a module (for example, a chip or a chip system) configured in a network device. The network device may be an access network device, for example, a base station (base station), a NodeB (NodeB), an evolved NodeB (evolved NodeB, eNodeB or eNB), a transmission reception point (transmission reception point, TRP), a next generation NodeB (next generation NodeB, gNB) in a $5^{th}$ generation ($5^{th}$ generation, 5G) mobile communication system, an access network device in an open radio access network (open radio access network, O-RAN or open RAN), a next-generation base station in a $6^{th}$ generation ($6^{th}$ generation, 6G) mobile communication system, a base station in a future mobile communication system, or an access node in a wireless fidelity (wireless fidelity, Wi-Fi) system. The network device may be a satellite (for example, 110a in FIG. 1), or may be a macro base station (for example, 110b in FIG. 1). The access network device may be a micro base station or an indoor base station (for example, 110c in FIG. 1), or may be a relay node, a master node, or the like. A specific technology and a specific device form that are used by the network device are not limited in this application. In embodiments of this application, some or all functions of the network device may be on a non-terrestrial network (non-terrestrial networks, NTN) platform (where the NTN platform includes but is not limited to a satellite, an unmanned aircraft system (unmanned aircraft system, UAS), a high altitude communication platform (high altitude platform station, HAPS), and the like), or some or all functions of the network device are on the ground, and the NTN platform is responsible for forwarding a signal between UE and the access network device.

The first communication apparatus provided in embodiments of this application may alternatively be a module or a unit completing some functions of the network device, for example, may be a central unit (central unit, CU), a distributed unit (distributed unit, DU), a central unit control plane (CU control plane, CU-CP) module, or a central unit user plane (CU user plane, CU-UP) module. In some other deployments, the first communication apparatus may alternatively be an antenna unit (radio unit, RU) or the like. In some other deployments, the first communication apparatus may alternatively be an open radio access network (open radio access network, ORAN) architecture or the like. A specific type of the first communication apparatus is not limited in this application. For example, when the first communication apparatus is of an ORAN architecture, the first communication apparatus shown in embodiments of this application may be an access network device in an ORAN, a module in an access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU. During specific implementation, a receiving operation of the first communication apparatus described in embodiments may be an input

operation, a sending operation may be an output operation, a signal (for example, data/signaling/signal) received from the second communication apparatus may be indirectly obtained through transmission by another apparatus, and a signal sent to the second communication apparatus may indirectly reach the second communication apparatus through transmission by another apparatus. This is not limited in this application.

The second communication apparatus provided in embodiments of this application may be a terminal device or a module (for example, a chip or a chip system) configured in a terminal device. The terminal device may also be referred to as a terminal, including but not limited to user equipment (user equipment, UE), a mobile station, a mobile terminal, or the like. The terminal device may be widely used in various scenarios for communication. For example, the scenarios include but are not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b shown in FIG. 1), an unmanned aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used by the terminal device are not limited in this application.

The network device and/or the terminal device may be at fixed positions, or may be movable. The network device and/or the terminal device may be deployed terrestrially, including indoors or outdoors, or may be handheld or vehicle-mounted, may be deployed on a water surface, or may be deployed on an airplane, a balloon, and an artificial satellite in the air. An environment/scenario in which the network device and the terminal device are located are not limited in this application. The network device and the terminal device may be deployed in a same environment/scenario or different environments/scenarios. For example, the network device and the terminal device are both deployed terrestrially; or the network device is deployed terrestrially, and the terminal device is deployed on the water surface. Examples are not enumerated.

In a current transmission manner in which reference signals are evenly distributed (for example, reference signals are distributed at intervals in time domain and/or frequency domain), transmission flexibility is insufficient, and reference signal resource overheads may be relatively high, affecting a throughput. For example, in a scenario in which a relative speed between communication device is relatively high and multi-paths are relatively rich, both time selective fading and frequency selective fading exist, the reference signal resource overheads increase, and channel estimation is relatively difficult.

This application proposes that in a same scenario, for a case in which there is a relative speed between communication devices, the time-varying channel has spatial and temporal continuity. For example, generation and extinction processes of energy components of a signal between two communication devices having a relative speed in a plurality of transmission paths on a channel are continuous over time, that is, the energy components of the signal in the transmission paths are in a linear relationship with time. As shown in FIG. 2, there are a plurality of transmission paths for a signal between a vehicle used as a terminal device and a network device, for example, a reflection path 0, a reflection path 1, a reflection path 2, and a direct path 3 that are shown in FIG. 2. In a process from a time at which the terminal device enters a coverage area of the network device to a time at which the terminal device leaves the coverage area of the network device, energy components of a signal of the terminal device on different transmission paths at different locations may be different. However, signal energy on each path changes from weak to strong and then to weak as the terminal device moves (that is, over time). In addition, for a same location in a same scenario, a distribution of scatterers is approximately the same, and Doppler spectra of terminal devices having different relative speeds with network devices are in a linear relationship. Therefore, the network device may fit a channel characteristic based on a characteristic of an environment in which the network device is located, and flexibly adjust, based on the channel characteristic, a distribution of reference signals used by the terminal device for channel estimation, so that channel estimation precision and resource utilization can be improved, and channel estimation in a relatively high-precision mobility scenario can be implemented by using relatively proper reference signal resource overheads matching an environment.

FIG. 3 is a schematic flowchart of a reference signal transmission method 200 according to an embodiment of this application. The method 200 includes but is not limited to the following steps.

S301: A first communication apparatus determines a reference signal resource based on N pieces of channel characteristic information and M pieces of energy scale information, where the N pieces of channel characteristic information represent a channel between the first communication apparatus and a second communication apparatus, any piece of channel characteristic information indicates a correspondence between an energy component of the channel and a transmission resource, the reference signal resource includes a plurality of resource units in the transmission resource, and energy indicated by one or more pieces of energy scale information in correspondences indicated by one or

more pieces of channel characteristic information corresponds to one resource unit in the reference signal resource.

N and M are positive integers. Each of the N pieces of channel characteristic information indicates the correspondence between the energy component of the channel and the transmission resource. A combination of the N pieces of channel characteristic information may represent the channel between the first communication apparatus and the second communication apparatus, that is, represent a correspondence between the transmission resource and total energy of the channel between the first communication apparatus and the second communication apparatus.

For example, the transmission resource is a time domain resource and/or a frequency domain resource.

For example, the transmission resource is a time domain resource. In this case, each piece of channel characteristic information indicates a change relationship between the energy component of the channel and a time. For example, the channel between the first communication apparatus and the second communication apparatus includes N signal transmission paths, and one piece of channel characteristic information specifically indicates a correspondence between the energy component of the channel in a transmission path and a time resource. The combination of the N pieces of channel characteristic information may represent a change of the total energy of the channel including N transmission paths over time.

For another example, the transmission resource is a frequency domain resource, the N pieces of channel characteristic information represent correspondences corresponding to different Doppler frequency shifts. Each piece of channel characteristic information indicates a change relationship between an energy component corresponding to each Doppler frequency shift and a frequency. The combination of the N pieces of channel characteristic information may represent a change of total energy of channels with different Doppler frequency shifts as a frequency changes.

For another example, the transmission resource includes a time resource and a frequency resource. In this case, one piece of channel characteristic information indicates a correspondence between energy of the channel and a time-frequency resource, and the combination of the N pieces of channel characteristic information may represent a correspondence between the total energy of the channel and the time-frequency resource.

It should be understood that in embodiments of this application, the solutions provided in this application are mainly described by using an example in which the transmission resource is a time resource. For an implementation in which the transmission resource is a frequency resource or a time-frequency resource, refer to the implementation in which the transmission resource is a time resource. Details are not described in this application again.

In an implementation, each of the N pieces of channel characteristic information indicates a basis function. The basis function represents a correspondence between an energy component of the channel indicated by the channel characteristic information and a time. The N pieces of channel characteristic information indicate N basis functions, that is, a combination of the N basis functions may represent the channel between the first communication apparatus and the second communication apparatus.

Optionally, function types of the N basis functions may be the same or may be different. For example, the function types of the N basis functions may include but are not limited to one or more of a Gaussian envelope complex sine function, a Rayleigh distribution function, or a model function obtained through artificial intelligence modeling.

For example, the function type of the basis function is a Gaussian envelope complex sine function, and the transmission resource is a time domain resource. Any one of the N basis functions represents a change of an energy component of a channel in one of the N transmission paths between the first communication apparatus and the second communication apparatus over time. For example, the N transmission paths may be N transmission paths with strongest energy between the first communication apparatus and the second communication apparatus. Four basis functions shown in FIG. 4 are a basis function 0, a basis function 1, a basis function 2, and a basis function 3. The four basis functions may respectively represent changes of energy components of channels in four transmission paths between the first communication apparatus and the second communication apparatus over time. For example, the fourth transmission paths may be changes of energy components of channels in four transmission paths in the example shown in FIG. 2 over time. Superposition of the four basis functions may represent a change of the total energy of the channel between the first communication apparatus and the second communication apparatus over time. Specifically, the four basis functions may represent a change status of energy of channels in the four transmission paths over time in a future period of time, so that the first communication apparatus can determine, based on a possible change status of the channel, a reference signal resource used to transmit a reference signal, to perform channel estimation more accurately, and improve signal transmission reliability.

It should be understood that in consideration of a relative speed between the first communication apparatus and the second communication apparatus, if the first communication apparatus is at a fixed location, and the second communication apparatus has a moving speed relative to the first communication apparatus, the location of the second communication apparatus changes over time. Therefore, any one of the N basis functions may indicate a change status of an energy component of a channel in one of the N transmission paths between the first communication apparatus and the second communication apparatus with a location (or a distance relative to a reference point) of the second communication apparatus.

The N pieces of channel characteristic information may be preconfigured or determined by the first communication apparatus.

In an example, the N pieces of channel characteristic information may be preconfigured in the first communication apparatus. For example, the first communication apparatus is an access network device, and the access network device may be preconfigured with the N pieces of channel characteristic information matching an environment in which the access network device is located. The access network device may determine the reference signal resource based on the preconfigured N pieces of channel characteristic information.

In another example, the N pieces of channel characteristic information may be determined by the first communication apparatus.

The first communication apparatus may obtain third information, where the third information indicates one or more of a location, a speed, or a moving direction of the second communication apparatus. The first communication apparatus may determine the N pieces of channel characteristic information based on the third information.

For example, the third information may be sensing information of the second communication apparatus carried in a sensing signal. The second communication apparatus sends, to the first communication apparatus, the sensing signal carrying the third information. The first communication apparatus may measure the sensing signal to obtain the third information. Alternatively, the third information may be communication information sent by the second communication apparatus to the first communication apparatus. This is not limited in this application.

After obtaining the third information of the second communication apparatus, the first communication apparatus may determine, in a candidate channel characteristic information set based on one or more of the location, the speed, or the moving direction of the second communication apparatus, the N pieces of channel characteristic information representing the channel between the first communication apparatus and the second communication apparatus.

The candidate channel characteristic information set is a channel characteristic information set corresponding to the environment in which the first communication apparatus is located. The first communication apparatus may determine the candidate channel characteristic information set based on historical prior information. The historical prior information may include but is not limited to sensing information and channel state information of a plurality of communication apparatuses historically communicating with the first communication apparatus. The sensing information may include but is not limited to one or more of speeds, locations, and moving directions of the plurality of communication apparatuses.

Specifically, the first communication apparatus may determine, based on the historical prior information, a candidate basis function set corresponding to the environment in which the first communication apparatus is located. One piece of candidate channel characteristic information in the foregoing channel characteristic information set indicates one candidate basis function in the candidate basis function set.

In an example, a basis function set may be predefined, and the first communication apparatus may determine, in the predefined basis function set based on the historical prior information, the candidate basis function set corresponding to the environment in which the first communication apparatus is located.

In another example, a candidate value set of at least one characteristic parameter of the basis function may be predefined. The first communication apparatus may select a candidate value of each characteristic parameter from the candidate value set of the at least one characteristic parameter based on the historical prior information, and determine the candidate basis function corresponding to the environment in which the first communication apparatus is located to obtain the candidate basis function set.

For example, the first communication apparatus may determine a correspondence between energy components of channels in different signal transmission paths and a time/location on a moving route based on historical prior information of a plurality of communication apparatuses with a same moving route or approximately same moving routes. For one transmission path, the first communication apparatus may determine, based on a correspondence between an energy component of a channel in the transmission path and a time/location, one or more of a type of a basis function representing the correspondence, a time center corresponding to maximum energy of the basis function, frequency information of the basis function (for example, a floating frequency), and fading characteristic information of the basis function, so that the basis function can relatively accurately represent the correspondence between the energy component of the channel in the transmission path and the time/location. The first communication apparatus may determine, from a candidate value set of each characteristic parameter, a parameter value that can enable the basis function to relatively accurately represent the correspondence.

For example, the type of the basis function is a Gaussian envelope complex sine function. One Gaussian envelope complex sine function may represent a change of an energy component $h(t)$ of a channel in one transmission path over time $t$, that is, a correspondence between the energy component $h(t)$ and the time $t$. For example, the correspondence meets the following formula:

$$h(t)=\left(\frac{\alpha}{\pi}\right)^{\frac{1}{4}} e^{-\frac{\alpha}{2}(t-T)} e^{j\Omega t}$$

A characteristic parameter of the Gaussian envelope complex sine function may include an attenuation coefficient $\alpha$, a time center $\boldsymbol{T}$, and a frequency center $\boldsymbol{\Omega}$. The first communication apparatus determines the correspondence between the energy component of the channel in the transmission path and the time/location based on the historical prior information. By determining values of the three characteristic parameters, namely, the attenuation coefficient $\boldsymbol{\alpha}$, the time center $\boldsymbol{T}$, and the frequency center $\boldsymbol{\Omega}$, the first communication apparatus obtains the Gaussian envelope complex sine function that can relatively accurately represent the correspondence. For example, the first communication apparatus may determine, from a candidate value set of each characteristic parameter, a parameter value that can enable the basis function to relatively accurately represent the correspondence.

The foregoing is merely an example. During specific implementation, it may be possible that only one or more types of basis functions are predefined, and the first communication apparatus obtains, through calculation, a value of each characteristic parameter of the basis functions. This is not limited in this application.

The first communication apparatus may determine M pieces of energy scale information, to determine the reference signal resource based on the N pieces of channel characteristic information and the M pieces of energy scale information.

The first communication apparatus may determine the M pieces of energy scale information based on correspondences between energy components of channels in N paths and the time/location, that is, based on a possible change status of an energy component of a channel in each path over time, so that a reference signal is transmitted at a time corresponding to energy indicated by the M pieces of energy scale information in N correspondences, and relatively accurate channel information can be obtained through measurement based on the reference signal.

For example, the four basis functions that are shown in FIG. 4 and that represent that the energy components of the channels in the four transmission paths change over time are used as an example. The first communication apparatus may determine, based on change features of the four transmission paths, two pieces of energy scale information that can be used obtain a change feature of each path. For example, the two pieces of energy scale information respectively indicate energy $h_1$ and energy $h_2$. The first communication apparatus then determines times corresponding to the energy $h_1$ and the energy $h_2$ in the four basis functions. For example, as shown in FIG. 5, the first communication apparatus may determine a time corresponding to the energy $h_1$ in each of the four basis functions and a time corresponding to the energy $h_2$, and determine times $t_1$ to $t_{10}$. The first communication apparatus may determine a reference signal resource. The reference signal resource includes 10 resource units, that is, 10 time units. The 10 time units are a time unit $t_1$ to a time unit $t_{10}$. For example, the time unit may be a time domain symbol, for example, an orthogonal frequency division multiplexing (orthogonal frequency division multiplexing, OFDM) symbol. Alternatively, the time unit may be a time domain symbol group including a predefined quantity of time domain symbols, for example, a slot or a subframe. However, this application is not limited thereto. The time unit may alternatively be a microsecond, a millisecond, or a second.

If the basis function is a Gaussian envelope complex sine function, the basis function $h(t,i)$ meets the following formula:

$$h(t,i)=\left(\frac{\alpha_i}{\pi}\right)^{\frac{1}{4}} e^{-\frac{\alpha_i}{2}(t-T_i)} e^{j\Omega_i t}$$

*i is* an identifier of the basis function, and *i* is equal to 0, 1, 2, or 3. The first communication apparatus may determine a time $t_{i,h_1}$ when $h(t,i)=h_1$ and a time $t_{i,h_2}$ when $h(t,i)=h_2$. The first communication apparatus may determine the time unit $t_1$ to the time unit $t_{10}$.

In an implementation, that the first communication apparatus determines the reference signal resource based on the N pieces of channel characteristic information and the M pieces of energy scale information includes: The first communication apparatus determines the reference signal resource based on the N pieces of channel characteristic information, the M pieces of energy scale information, and minimum resource interval information. An interval between any two resource units in the reference signal resource is greater than or equal to an interval (that is, a minimum resource interval) indicated by the minimum resource interval information.

There may be similar resource units among the resource units in the reference signal resource determined by the first communication apparatus based on the N pieces of channel characteristic information and the M pieces of energy scale information. Channel characteristics corresponding to the similar resource units are similar. Therefore, the minimum resource interval is set to select a resource unit meeting a requirement, so that an interval between any two resource units in the reference signal resource determined by the first communication apparatus is greater than or equal to the minimum resource interval, to reduce unnecessary reference signal resource overheads.

For example, the minimum resource interval may be predefined. Alternatively, the minimum resource interval is determined by the first communication apparatus as required. For example, the first communication apparatus may determine the minimum resource interval based on channel estimation precision corresponding to a service requirement,

and/or the first communication apparatus may determine the minimum resource interval based on communication resource utilization. This is not limited in this application.

For example, the first communication apparatus determines a total of 10 time units $t_1$ to $t_{10}$ shown in FIG. 5. The first communication apparatus may determine a value between a time interval between two adjacent time units and the minimum resource interval based on a time sequence. If the time interval between the two adjacent time units is greater than or equal to the minimum resource interval, the two time units are retained. If the time interval between the two adjacent time units is less than the minimum resource interval, a time unit whose time is earlier in the two time units is retained, and a time unit whose time is later is deleted. If a time interval between $t_1$ and $t_2$ is less than the minimum resource interval, the first communication apparatus retains the time unit $t_1$ whose time is earlier. If a time interval between $t_1$ and $t_3$ is greater than the minimum resource interval, the first communication apparatus retains $t_1$ and $t_3$. The rest may be deduced by analogy. Alternatively, if a time interval between two adjacent time units is less than the minimum resource interval, the first communication apparatus may retain a time unit whose time is later and delete a time unit whose time is earlier.

For another example, the first communication apparatus may perform retention based on priorities of the N basis functions. If a time interval between two adjacent time units is less than the minimum resource interval, a time unit determined based on a basis function with a higher priority is retained. If the two time units are time units determined based on a same basis function, a time unit whose time is earlier or later is retained.

In an implementation, priorities of basis functions may be determined based on fading characteristics of the basis functions.

For example, the basis functions are Gaussian envelope complex sine functions. In this case, the priorities of the basis functions may be determined based on roll-off factors, and it may be specified that a larger roll-off factor indicates a basis function with a higher priority.

For another example, the priorities of the basis functions may be determined based on an energy range (that is, a difference between a maximum energy value and a minimum energy value) of the basis functions within a preset time period. For example, a larger energy range indicates a higher priority.

S302: The first communication apparatus sends first information to the second communication apparatus, where the first information indicates the at least one piece of energy scale information.

Correspondingly, the second communication apparatus receives the first information from the first communication apparatus. The second communication apparatus determines the M pieces of energy scale information based on the first information.

For example, the M pieces of energy scale information are M energy values, and the first information may include the M energy values; or a plurality of candidate energy values and an identifier of each candidate energy value may be predefined or preconfigured, the first information includes M identifiers, and the candidate energy values corresponding to the M identifiers are the M energy values. Alternatively, a plurality of candidate energy value sets and an identifier of each candidate energy value set may be predefined, each candidate energy value set includes at least one energy value, the first information includes one identifier, and a candidate energy value set corresponding to the identifier includes the M energy values. However, this application is not limited thereto. The first information may alternatively indicate the M pieces of energy scale information in another manner.

S303: The second communication apparatus determines the reference signal resource based on the N pieces of channel characteristic information and the M pieces of energy scale information.

The N pieces of channel characteristic information may be preconfigured, or the first communication apparatus sends second information to the second communication apparatus, where the second information indicates the N pieces of channel characteristic information. After receiving the second information, the second communication apparatus determines the N pieces of channel characteristic information based on the second information.

The N pieces of channel characteristic information include information about the basis function representing a correspondence between the energy component of the channel and the transmission resource. The information about the basis function includes one or more of the following information:

an identifier of the basis function, function type information of the basis function, resource information corresponding to maximum energy in the correspondence represented by the basis function, frequency information of the basis function, or fading characteristic information of the basis function.

For example, a basis function set may be predefined. The channel characteristic information includes the identifier of the basis function. The second communication apparatus may determine, in the basis function set based on identifiers of basis functions included in the N pieces of channel characteristic information, the N basis functions corresponding to N identifiers. The second communication apparatus may determine the reference signal resource based on the N basis functions and the M pieces of energy scale information.

For another example, a candidate value set of at least one characteristic parameter of the basis function may be predefined. One of the N pieces of channel characteristic information includes an identifier of a candidate value of each characteristic parameter of one basis function. The second communication apparatus may determine the N basis functions based on the N pieces of channel characteristic information and the candidate value set of each characteristic

parameter of the basis function.

For another example, a type of the basis function may be predefined. One of the N pieces of channel characteristic information includes a parameter value of each characteristic parameter of one basis function determined by the first communication apparatus. The second communication apparatus may determine the N basis functions based on the predefined type of the basis function and the N pieces of channel characteristic information.

A manner in which the second communication apparatus determines the reference signal resource is the same as a manner in which the first communication apparatus determines the reference signal resource. For details, refer to the foregoing descriptions for implementation. Details are not described herein again. The reference signal resources determined by the first communication apparatus and the second communication apparatus in the same manner are the same, reaching a consensus on the reference signal resource.

If the first communication apparatus determines the reference signal resource based on the N pieces of channel characteristic information, the M pieces of energy scale information, and the minimum resource interval information, the second communication apparatus determines the reference signal resource in the same manner. The minimum resource interval information may be predefined or may be obtained by the second communication apparatus from the first communication apparatus.

It should be understood that one or more of the channel characteristic information, the energy scale information, and the minimum resource interval information may be carried in same information sent by the first communication apparatus to the second communication apparatus, or may be separately carried in different information. This is not limited in this application.

S304: The first communication apparatus and the second communication apparatus transmit a reference signal on the reference signal resource.

In an implementation, the first communication apparatus sends a reference signal to the second communication apparatus, where the reference signal is carried on the reference signal resource.

The first communication apparatus sends the reference signal to the second communication apparatus on the reference signal resource. Correspondingly, the second communication apparatus receives the reference signal on the reference signal resource.

The second communication apparatus may determine channel state feature information based on the reference signal, where the channel state feature information indicates a state of a channel corresponding to the reference signal. Then, the second communication apparatus obtains channel information based on the channel state feature information and the N pieces of channel characteristic information used to determine the reference signal resource.

In another implementation, the second communication apparatus sends a reference signal to the first communication apparatus, where the reference signal is carried on the reference signal resource.

The first communication apparatus sends the reference signal to the second communication apparatus on the reference signal resource. Correspondingly, the first communication apparatus receives the reference signal on the reference signal resource.

The first communication apparatus may determine channel state feature information based on the reference signal, where the channel state feature information indicates a state of a channel corresponding to the reference signal. Then, the first communication apparatus obtains channel information based on the channel state feature information and the N pieces of channel characteristic information used to determine the reference signal resource.

During specific implementation, in the embodiment shown FIG. 2, the first communication apparatus may be configured in a network device, and the second communication apparatus may be configured in a terminal device. Alternatively, the first communication apparatus may be configured in a terminal device, and the second communication apparatus may be configured in a network device. Alternatively, the first communication apparatus and the second communication apparatus may be configured in two different terminal devices or different network devices. This is not limited in this application.

For example, the first communication apparatus may be a network device, and the second communication apparatus may be a terminal device. After performing S301 to determine the reference signal resource, the network device sends the first information to the terminal device. The terminal device performs S303 based on the first information to determine the reference signal resource. For example, the reference signal resource may be a downlink reference signal resource. In this case, the network device sends a downlink reference signal on the reference signal resource. Correspondingly, the terminal device receives the reference signal from the network device on the reference signal resource, and obtains downlink channel information based on the reference signal. Alternatively, the reference signal resource may be an uplink reference signal resource. In this case, the terminal device sends an uplink reference signal on the reference signal resource. Correspondingly, a network device receives the reference signal from the terminal device on the reference signal resource, and obtains uplink channel information based on the reference signal.

For another example, the first communication apparatus may be a terminal device, and the second communication apparatus may be a network device. After performing S301 to determine the reference signal resource, the terminal device sends the first information to the network device. The network device performs S303 based on the first

information to determine the reference signal resource. The reference signal resource may be a downlink reference signal resource or an uplink reference signal resource.

According to the foregoing solution, the first communication apparatus may fit a channel characteristic based on a characteristic of an environment in which the first communication apparatus is located, and flexibly adjust, based on the channel characteristic, a distribution of reference signals used for channel estimation between the first communication apparatus and the second communication apparatus, so that channel estimation precision and resource utilization can be improved, and channel estimation in a relatively high-precision mobility scenario can be implemented by using relatively proper reference signal resource overheads matching an environment.

The following describes a manner, provided in embodiments of this application, for determining a correspondence between an energy component of a channel in the transmission path and a time/location based on the historical prior information. It should be understood that this application is not limited thereto.

It can be learned from a feature of a Doppler (Doppler) spectrum that distributions of scatterers at a same location in a same scenario are approximately the same, and Doppler spectrums of communication apparatuses at different speeds are in a linear relationship. This application proposes that a communication apparatus may predict a channel between the communication apparatus and a target communication apparatus by using a basis function set fitting time-frequency analysis method and based on the historical prior information, that is, a Doppler spectrum and a channel characteristic, at a same location, of another communication apparatus that communicates with the communication apparatus and that has a different speed. As described in the foregoing embodiment, the first communication apparatus may predict the channel between the first communication apparatus and the second communication apparatus based on the method, to obtain a plurality of pieces of channel characteristic information representing the channel and determine the reference signal resource.

Based on an adaptive expansion theory, a better basis function design can implement convergence of residual energy to 0 at exponential attenuation, and a channel $\mathbf{h}_{target}(t)$ can be well reconstructed based on an adaptive basis function set, where

$$\mathbf{h}_{target}\left(t\right)=\sum_{p=1}^{N_{iterate}}\mathbf{B}_{p}\mathbf{h}_{p}\left(t\right).$$

$\mathbf{B}_p$ is an adaptive expansion coefficient, and $\mathbf{h}_p(t)$ is a basis function. The communication apparatus may obtain $\mathbf{B}_p$ and $\mathbf{h}_p(t)$ of each iteration through iteration and exhaustive search based on the historical prior information. A residual after a p<sup>th</sup> iteration is $\mathbf{s}_p=\mathbf{s}_{p-1}-\mathbf{B}_{p-1}\mathbf{h}_{p-1}(t)$. If an iteration interruption condition $\frac{\left\|\mathbf{s}_p\right\|_2^2}{\left\|\mathbf{s}_0\right\|_2^2}\le\xi$ is met, where $\xi$ is a preset error tolerance limit, $\left\|\mathbf{X}\right\|_2^2$ represents a square of a 2-norm of X, that is, represents an inner product of X. If the communication apparatus meets the iteration interruption condition after an $N_{iterate}$<sup>th</sup> iteration, $N_{iterate}$ adaptive expansion coefficients obtained after $N_{iterate}$ iterations and $N_{iterate}$ basis functions are a basis function set representing a channel. $1 \le p \le N_{iterate}$.

An example in which a Gaussian envelope complex sine function is a basis function is used below to describe a manner for iteratively searching for the adaptive expansion coefficient and the basis function. It should be understood that this application is not limited thereto. In a specific embodiment, another function and a plurality of different types of functions may alternatively be selected to represent a channel between communication apparatuses. For example, a Gaussian envelope complex sine function corresponding to the p<sup>th</sup> iteration may be expressed as follows:

$$\mathbf{h}_{p}\left(t\right)=\left(\frac{\alpha_{p}}{\pi}\right)^{\frac{1}{4}}e^{-\frac{\alpha_{p}}{2}\left(t-T_{p}\right)}e^{j\Omega_{p}t}$$

Parameter variables $\alpha_p$, $\boldsymbol{T}_p$, and $\boldsymbol{\Omega}_p$ are respectively a reciprocal of a variance of the Gaussian envelope of the p<sup>th</sup> iteration, a time center of the Gaussian function, and a frequency center of the Gaussian function. An objective of each iteration is to obtain optimal $\alpha_p$, $\boldsymbol{T}_p$, and $\boldsymbol{\Omega}_p$ through searching.

The following provides detailed descriptions by using an example in which a network device determines a channel characteristic of a target terminal device. The network device may use sensing information and channel characteristics of $N_{MT}$ terminal devices communicating with the network device as historical prior information used to predict a channel characteristic of a target terminal device. For example, a speed of a terminal device 1 is an integer multiple of a speed of another terminal device. For example, the speed of the terminal device 1 is $i_{MT}$ times of $i_{MT}$ (where $i_{MT}$

= 2, 3, ..., or $N_{MT}$) of the terminal device. In this case, the speed of the terminal device $i_{MT}$ may be expressed as follows:

$$v_{i_{MT}} = \frac{v_1}{i_{MT}},$$

Therefore, a quantity $N_{snapshot}^{(i_{MT})}$ of channel samples (or referred to as a quantity of snapshots) of the terminal device $i_{MT}$ is as follows:

$$N_{snapshot}^{(i_{MT})} = \frac{\frac{L_{path}}{v_{i_{MT}}}}{r_{update}} + 1$$

$r_{update}$ is a channel update rate (or referred to as a sampling rate of a channel in terms of time), and $L_{path}$ is a sampling path length. The channel frequency response (channel frequency response, CFR) of the terminal device $i_{MT}$ is denoted as follows:

$$\tilde{\mathbf{H}}^{(i_{MT})} \in \mathbf{C}^{N_c \times N_{snapshot}^{(i_{MT})}}$$

A quantity of sub-carries is $N_c$. In this application, $C^{A \times B}$ represents a set of complex matrices of A rows and B columns, and $N_{snapshot}^{(i_{MT})}$ column vectors in $\tilde{\mathbf{H}}^{(i_{MT})}$ are frequency response vectors obtained by performing sampling on the channel of the terminal device $i_{MT}$ at $N_{snapshot}^{(i_{MT})}$ sampling moments.

Because the speed of the terminal device 1 is $i_{MT}$ times of that of the terminal device $i_{MT}$ and lengths of sampling paths of $N_{MT}$ terminal devices are equal, which are $L_{path}$, a $(1+k \cdot i_{MT})^{th}$ column (where $k$ = 0, 1, ..., or $N_{snapshot}^{(1)}$ ) of a channel frequency response $\tilde{\mathbf{H}}^{(i_{MT})}$ of the terminal device $i_{MT}$ is a $(k+1)^{th}$ column of a sampling channel frequency response $\tilde{\mathbf{H}}^{(1)}$ of the terminal device 1, that is:

$$\tilde{\mathbf{H}}^{(1)} = \tilde{\mathbf{H}}^{(i_{MT})}\left(:,1:i_{MT}:N_{snapshot}^{(i_{MT})}\right) \in \mathbf{C}^{N_c \times N_{snapshot}^{(1)}}$$

where

$$1:i_{MT}:N_{snapshot}^{(i_{MT})} = \begin{bmatrix} 1 & i_{MT} & 2i_{MT} & \cdots & N_{snapshot}^{(1)} i_{MT} \end{bmatrix}.$$

The network device may obtain the first $L_{slot}$ columns, used as historical prior information, of each of $N_{MT}$ channel frequency responses of the $N_{MT}$ terminal devices based on a quantity $L_{slot}$, which needs to be obtained, of sampling moments (or referred to as a quantity of sampling locations) of a channel frequency response of a target terminal. The first $L_{slot}$ columns of the channel frequency response of the terminal device $i_{MT}$ in the $N_{MT}$ terminal devices may be $\mathbf{H}^{(i)}$ (:,1: $L_{slot}$). A superposition of the first $L_{slot}$ columns of each of the $N_{MT}$ channel frequency responses is used as an initial residual $\mathbf{s}_0$, where $\mathbf{s}_0$ meets the following formula:

$$\mathbf{s}_0 = \sum_{i=1}^{N_{MT}} \tilde{\mathbf{H}}^{(i_{MT})}\left(:,1:L_{slot}\right)$$

That is, $L_{slot}$ column vectors in $\mathbf{s}_0$ are respectively initial estimated values of channel frequency responses corresponding to $L_{slot}$ future sampling moments (or locations of $L_{slot}$ sampling moments) of the target terminal device.

The network device iteratively searches for $\alpha_p$, $\boldsymbol{T}_p$, and $\boldsymbol{\Omega}_p$ based on the initial residual $\mathbf{s}_0$, to obtain the optimal $\alpha_p$, $\boldsymbol{T}_p$, and $\boldsymbol{\Omega}_p$ that are determined in each iteration. As described above, $p$ is an identifier of a quantity of iterations, where $p$=1,

2, ..., or $N_{interate}$.

As described above, the network device determines, after an (for example, an $N_{iterate}$ $^{th}$) iteration, that the iteration interruption condition is met, and $N_{iterate}$ adaptive expansion coefficients and $N_{iterate}$ basis functions that are obtained through the $N_{iterate}$ iteration are a basis function set representing a channel. For each iteration, the network device performs S exhaustive searches, and search ranges of $\alpha_{p,s}$ and $T_{p,s}$ in each iteration and steps of the exhaustive searches may sequentially decrease with a quantity of exhaustive searches. The parameter variables $\alpha_{p,s}$ and $T_{p,s}$ are respectively a reciprocal of a variance of a Gaussian envelope in an $s^{th}$ exhaustive search in the $p$ $^{th}$ iteration and a time center of a Gaussian function. $p$=1, 2, ..., or $Ni_{nterate}$, where $N_{interate} \le I_{\max}$, $I_{\max}$ is a predefined maximum quantity of iterations, an identifier of a quantity of exhaustive searches meets that $s = 1,2,\cdots,S$, and $S$ is a maximum quantity of search times.

For example, a search range and a search step of each search for $\alpha_{p,s}$ and $T_{p,s}$ in the $p^{th}$ iteration may be shown in Table 1. An example in which a quantity of search times meets that S =3 is used in Table 1. When s = 1 is searched for the first time exhaustively, the network device finds sub-optimal parameters $\bar{\alpha}_{p,1}$ and $\bar{T}_{p,1}$ by using a larger step in a larger search range of $\alpha_{p,s}$ and $T_{p,s}$. For example, the network device finds the sub-optimal parameters $\bar{\alpha}_{p,1}$ and $\bar{T}_{p,1}$ in a search range of $\alpha_{p,1} \in [0,A], T_{p,1} \in [0, L_{slot}-1]$ by using a step of 10. Then, when s = 2 is searched for the second time exhaustively, the search range is narrowed down to further find the sub-optimal parameters $\bar{\alpha}_{p,2}$ and $\bar{T}_{p,2}$ by using a smaller step. For example, the network device performs search in search ranges $\alpha_{p,2} \in \left[\max\left\{\bar{\alpha}_{p,1} - \frac{A}{100}, 0\right\}, \min\left\{\bar{\alpha}_{p,1} + \frac{A}{100}, A\right\}\right]$ and $T_{p,2} \in \left[\max\left\{\bar{T}_{p,1} - \frac{A}{100}, 0\right\}, \min\left\{\bar{T}_{p,1} + \frac{A}{100}, L_{slot} - 1\right\}\right]$ to obtain the sub-optimal parameters $\bar{\alpha}_{p,2}$ and $\bar{T}_{p,2}$ by using a step of 1. Finally, when s = 3 is searched for the last time in this iteration, the optimal parameters $\bar{\alpha}_{p,S}$ and $\bar{T}_{p,S}$ are found in search ranges of

$$\alpha_{p,3} \in \left[\max\left\{\bar{\alpha}_{p,2} - \frac{A}{1000}, 0\right\}, \min\left\{\bar{\alpha}_{p,2} + \frac{A}{1000}, A\right\}\right]$$

and

$$T_{p,3} \in \left[\max\left\{\bar{T}_{p,2} - \frac{A}{1000}, 0\right\}, \min\left\{\bar{T}_{p,2} + \frac{A}{1000}, L_{slot} - 1\right\}\right].$$

Table 1

| s | Search ranges of $\alpha_{p,s}$ and $T_{p,s}$ in the s$^{th}$ exhaustive search | Step |
|---|---|---|
| 1 | $\alpha_{p,1} \in [0,A], T_{p,1} \in [0, L_{slot} - 1]$ | 10 |
| 2 | $\alpha_{p,2} \in \left[\max\left\{\bar{\alpha}_{p,1} - \frac{A}{100}, 0\right\}, \min\left\{\bar{\alpha}_{p,1} + \frac{A}{100}, A\right\}\right]$ <br> $T_{p,2} \in \left[\max\left\{\bar{T}_{p,1} - \frac{A}{100}, 0\right\}, \min\left\{\bar{T}_{p,1} + \frac{A}{100}, L_{slot} - 1\right\}\right]$ | 1 |
| 3 | $\alpha_{p,3} \in \left[\max\left\{\bar{\alpha}_{p,2} - \frac{A}{1000}, 0\right\}, \min\left\{\bar{\alpha}_{p,2} + \frac{A}{1000}, A\right\}\right]$ <br> $T_{p,3} \in \left[\max\left\{\bar{T}_{p,2} - \frac{A}{1000}, 0\right\}, \min\left\{\bar{T}_{p,2} + \frac{A}{1000}, L_{slot} - 1\right\}\right]$ | 0.1 |

An exhaustive search range and exhaustive search compensation in each iteration are described above. The following describes a specific iteration manner. A CFR matrix $\mathbf{R}_{p,s}$ obtained by the network device through Gaussian envelope modulation may be expressed as follows:

$$\mathbf{R}_{p.s} = \mathbf{s}_p \odot \left( \mathbf{1}_{N_c \times 1} \otimes \mathbf{G}_{\alpha_{p,s}, T_{p,s}} \right)$$

$\odot$ represents a Hadamard (Hadamard) product, $\otimes$ represents convolution, $N_c$ is a quantity of sub-carriers in a communication frequency band, and $\mathbf{G}_{\alpha p,s, Tp,s}$ is a Gaussian envelope function set, and is denoted as follows:

$$\mathbf{G}_{\alpha_{p,s}, T_{p,s}} = \left[ g_{\alpha_{p,s}, T_{p,s}}(0) \quad g_{\alpha_{p,s}, T_{p,s}}(1) \quad \cdots \quad g_{\alpha_{p,s}, T_{p,s}}(L_{slot} - 1) \right]$$

$g_{\alpha p,s, Tp,s}(n)$ is a Gaussian envelope function, and is denoted as follows:

$$g_{\alpha_{p,s}, T_{p,s}}(n) = \left( \frac{\alpha_{p,s}}{\pi} \right)^{\frac{1}{4}} e^{-\frac{\alpha_{p,s}}{2}(n - T_{p,s})^2},$$

where $n = 0,1,\cdots,L_{slot}-1$.

A $c^{th}$ sub-carrier is used as an example. If a modulation CFR vector on the $c^{th}$ sub-carrier is $\mathbf{r}_{p,s}^{(c)} = \mathbf{R}_{p,s}(c,:)$, an adaptive extension coefficient corresponding to the $c^{th}$ sub-carrier is as follows:

$$\mathbf{B}_{p,s}^{(c)}(k) = \sum_{n=0}^{L_{slot}-1} \mathbf{r}_{p,s}^{(c)}(n) e^{-j\frac{2\pi}{L_{slot}} n(k-1)}, k = 1,2,\cdots,L_{slot}$$

A calculation form of the foregoing formula is equivalent to discrete Fourier transform (discrete fourier transform, DFT) of a point $L_{slot}$ of $\mathbf{r}_{p,s}^{(c)}$, that is, $\mathbf{B}_{p,s}^{(c)} = \mathbf{r}_{p,s}^{(c)} \mathbf{F}_{L_{slot}}$, $\mathbf{F}_{L_{slot}} \in \mathbb{C}^{L_{slot} \times L_{slot}}$, and $\mathbf{F}_{L_{slot}}$ is a DFT matrix. A fast Fourier transform (fast fourier transform, FFT) algorithm may be used to improve calculation efficiency.

To comprehensively analyze impact of values of $\alpha_{p,s}$ and $T_{p,s}$ that are found in each pair of exhaustive search on the adaptive extension coefficient, an equivalent adaptive extension coefficient $\mathbf{B}_{p,s}$ (or referred to as an equivalent adaptive extension coefficient of $N_c$ subcarriers) in a frequency band is denoted as follows:

$$\mathbf{B}_{p,s} = \sum_{c=1}^{N_c} \left\langle \left| \mathbf{B}_{p,s}^{(c)} \right| \right\rangle^2$$

$|\mathbf{X}|$ is performing a modulo operation on each element in the matrix or vector X, and $\langle \mathbf{X} \rangle^2$ is performing a square operation on each element in the matrix or vector $\mathbf{x}$. The network device may define a storage matrix $\Lambda_{p.s}$, where a quantity of rows of the storage matrix $\Lambda_{p,s}$ is equal to a quantity of combinations of values of $\alpha_{p,s}$ and $T_{p,s}$ that are found in the $s^{th}$ exhaustive search, that is, a quantity of combinations of values of $\alpha_{p,s}$ and $T_{p,s}$ that are found by the network device in the search ranges of $\alpha_{p,s}$ and $T_{p,s}$ based on the search step corresponding to the $s^{th}$ exhaustive search in the $s^{th}$ exhaustive search. An $l^{th}$ row of $\Lambda_{p,s}$, namely, $\Lambda_{p,s}(l,:)$, corresponds to a combination of an $l^{th}$ pair of $\alpha_{p,s}$ and $T_{p,s}$ that are found in the $s^{th}$ exhaustive search, that is, $\alpha_{p,s}^{l}$ obtained by using an $l^{th}$ time of step in the search range of searching for $\alpha_{p,s}$ and $T_{p,s}^{l}$ obtained by using the $l^{th}$ time of step in the search range of searching for $T_{p,s}$. The $l^{th}$ row $\Lambda_{p,s}(l,:)$ of $\Lambda_{p,s}$ may be expressed as follows:

$$\Lambda_{p,s}(l,:) = \left[ \frac{\left[\mathbf{B}_{p,s}\right]_{\max}}{\sqrt{\mathbf{G}_{\alpha_{p,s}^{l},T_{p,s}^{l}}\mathbf{G}_{\alpha_{p,s}^{l},T_{p,s}^{l}}^{\mathrm{H}}}} \quad \alpha_{p,s}^{l} \quad T_{p,s}^{l} \quad \Omega_{p,s}^{l} \right]$$

$\Lambda_{p,s}(l,:)$ further includes $\frac{\left[\mathbf{B}_{p,s}\right]_{\max}}{\sqrt{\mathbf{G}_{\alpha_{p,s}^{l},T_{p,s}^{l}}\mathbf{G}_{\alpha_{p,s}^{l},T_{p,s}^{l}}^{\mathrm{H}}}}$, $[\mathbf{B}_{p,s}]_{\max}$ is a maximum element in $\mathbf{B}_{p,s}$, and an index of $[\mathbf{B}_{p,s}]_{\max}$ in $\mathbf{B}_{p,s}$ is denoted as $m$. If $m>L_{slot}$, $\tilde{\Omega}_{p,s}=m-L_{slot}$. If $m \le L_{slot}$, $\tilde{\Omega}_{p,s}=m$.

After obtaining $\Lambda_{p,s}$ after the $s^{th}$ exhaustive search ends, the network device denotes, as $\bar{\alpha}_{p,s}$, $\bar{T}_{p,s}$, and $\bar{\Omega}_{p,s}$, parameters of a row in which a maximum value is located in the first column of $\Lambda_{p,s}$ and may determine that a basis function vector of the $s^{th}$ exhaustive search in the $p^{th}$ iteration is $\mathbf{h}_{p,s} = [h_{p,s}(0)\ h_{p,s}(1) \cdots h_{p,s}(L_{slot}-1)]$, where

$$h_{\bar{\alpha}_{p,s},\bar{T}_{p,s}}(t) = g_{\bar{\alpha}_{p,s},\bar{T}_{p,s}}(t)\,e^{j\frac{2\pi}{L_{slot}}t\cdot(\bar{\Omega}_{p,s}-1)}, t=0,1,\cdots,L_{slot}-1\cdot$$

Besides, an optimal equivalent adaptive expansion coefficient is $\bar{\mathbf{B}}_{p,s} = \frac{\mathbf{h}_{p,s}^{*}\mathbf{s}_{p}^{\mathrm{H}}}{\mathbf{h}_{p,s}\mathbf{h}_{p,s}^{\mathrm{H}}}$.

The foregoing process is repeated until $\mathbf{h}_{p,S}$ and $\bar{\mathbf{B}}_{p,S}$ are obtained after the last (namely, the $S^{th}$) search, indicating that the last exhaustive search in the $p^{th}$ iteration is completed. For ease of description, optimal parameters obtained through the last exhaustive search in the $p^{th}$ iteration are denoted as optimal parameters $\bar{\alpha}_p$, $\bar{T}_p$, and $\bar{\Omega}p$ that are obtained through the $p^{th}$ iteration. In this case, a basis function determined after the $p^{th}$ iteration meets that $\mathbf{h}_p = \mathbf{h}_{p,S}$ and a corresponding adaptive extension meets that $\bar{\mathbf{B}}_p = \bar{\mathbf{B}}_{p,S}$. The network device may define that an optimal parameter matrix $\Gamma_{pm} \in C^{I_{ma}\times 3}$, and a $p^{th}$ row of the optimal parameter matrix $\Gamma_{pm} \in C^{I_{max}\times 3}$ is used to store the optimal parameters $\bar{\alpha}_p$, $\bar{T}_p$, and $\bar{\Omega}p$ that are obtained through the $p^{th}$ iteration, that is, the $p^{th}$ row of $\Gamma_{pm}$ is denoted as $\Gamma_{pm}(p,:) = [\bar{\alpha}_p\ \bar{T}_p\ \bar{\Omega}_p]$. In addition, the network device may further define that a basis function matrix $\Gamma_{bf} \in C^{I_{rmax}\times I_{slot}}$. A $p^{th}$ row of the basis function matrix $\Gamma_{bf}$ is used to store a basis function $\mathbf{h}_p$ determined after the $p^{th}$ iteration, that is, the $p^{th}$ row of $\Gamma_{bt}$ is denoted as $\Gamma_{bf}(p,:) = \mathbf{h}_p$.

Finally, a residual obtained after the $p^{th}$ iteration is $\mathbf{s}_p = \mathbf{s}_{p-1} - \bar{\mathbf{B}}_{p-1}\mathbf{h}_{p-1}$. If an interruption condition $\frac{\|\mathbf{s}_p\|_2^2}{\|\mathbf{s}_0\|_2^2} \le \xi$ is met, the network device stops iteration. If the interruption condition $\frac{\|\mathbf{s}_p\|_2^2}{\|\mathbf{s}_0\|_2^2} \le \xi$ is not met, a next iteration is performed, that is, the foregoing process is repeated until the interruption condition is met or a maximum quantity of iterations (that is, $p = I_{max} = N_{iterate}$) is reached, and then the network device stops the iteration. If a residual $\mathbf{s}_P$ obtained after the $N_{iterate}$ th iteration meets the interruption condition or reaches the maximum quantity of iterations, where $1 \le N_{iterate} \le I_{max}$, the network device obtains that the basis function set $\Gamma_{bf}$ E $C^{N_{iterate}\times I_{slot}}$. Each row corresponds to one Gaussian envelope complex sine function (where in this example, the Gaussian envelope complex sine function is a discrete function). One element in each row represents a value of the Gaussian envelope complex sine function (that is, a channel energy component corresponding to a sampling moment) at the sampling moment corresponding to a column in which the element is located. The basis function set includes a total of $N_{iterate}$ Gaussian envelope complex sine functions. The $N_{iterate}$ Gaussian envelope complex sine functions may represent a channel between the network device and the target terminal device. One Gaussian envelope complex sine function represents a correspondence between a time/location and an energy component of a channel in a transmission path of the channel between the network device and the target terminal device.

After determining the basis function set, the network device may determine the reference signal resource based on the energy scale information and the basis function set.

In an optional implementation, the network device may prioritize basis functions in the basis function set based on a value of a range (that is, a difference between a maximum value and a minimum value) of the basis functions in the basis function set. For example, a larger range of the basis function indicates a higher priority. For example, the network device may determine a value of a range of each row vector (that is, one Gaussian envelope complex sine function) in the basis

function set $\mathbf{\Gamma}_{bf}$, and then re-sort, based on the values of the ranges of the row vectors, rows in which the row vectors are located in $\mathbf{\Gamma}_{bf}$. A row vector with a larger range has a smaller sequence number and a higher priority. A re-sorted matrix is denoted as $\mathbf{\Gamma}_{bf}^{(descend)}$. The network device may normalize all elements in any row of the re-sorted matrix $\mathbf{\Gamma}_{bf}^{(descend)}$ by using a maximum value in the row. The matrix obtained after normalization is denoted as $\overline{\mathbf{\Gamma}}_{bf}^{(descend)}$. The network device may specifically determine the reference signal resource based on $N_e$ pieces of energy scale information and the re-sorted basis function set $\overline{\mathbf{\Gamma}}_{bf}^{(descend)}$ obtained after normalization. For example, the $N_e$ pieces of energy scale information may be denoted as an energy scale vector $\mathbf{e}=\begin{bmatrix}\frac{1}{2} & \frac{1}{2^2} & \cdots & \frac{1}{2^{N_e}}\end{bmatrix}$. A normalized Gaussian envelope complex sine function in an $(r_d)^{th}$ row in $\overline{\mathbf{\Gamma}}_{bf}^{(descend)}$ is used as an example, where $r_d$ is an integer less than or equal to $N_{iterate}$ and greater than 0.

The network device determines a column sequence number $G_{\max}^{(r_d)}$ of a maximum amplitude value in the row, and divides amplitude values in the row into two parts. Column sequence number ranges of the two parts are $\left[1, G_{\max}^{(r_d)}\right]$ and $\left[G_{\max}^{(r_d)}+1, L_{slot}\right]$.

In $G_{\max}^{(r_d)}$ amplitude values (that is, channel energy components) in the column sequence number range $\left[1, G_{\max}^{(r_d)}\right]$, for each energy scale $\mathbf{e}(i_e)=\frac{1}{2^{i_e}}$, where $i_e$ = 1, 2, ..., or $N_e$, if the first (that is, an amplitude value whose column sequence number is 1) $\overline{\mathbf{\Gamma}}_{bf}^{(descend)}(r_d,1)$ is less than the energy scale $\mathbf{e}(i_e)$, an amplitude value that is in the $G_{\max}^{(r_d)}$ amplitude values and that is closest to a value of $e(i_e)$ is determined, that is, $\left[\left|\overline{\mathbf{\Gamma}}_{bf}^{(descend)}\left(r_d,1:G_{\max}^{(r_d)}\right)-\mathbf{e}(i_e)\right|\right]_{\min}$, where $[X]_{\min}$ is a minimum value of the matrix (or vector) **X**. The network device uses a sampling moment corresponding to a column sequence number $t_{\min}^{(i_e)}$ of the amplitude value $\left[\left|\overline{\mathbf{\Gamma}}_{bf}^{(descend)}\left(r_d,1:G_{\max}^{(r_d)}\right)-\mathbf{e}(i_e)\right|\right]_{\min}$ in $\overline{\mathbf{\Gamma}}_{bf}^{(descend)}$ as a resource unit of the reference signal resource. For example, the network device may store the column sequence number $t_{\min}^{(i_e)}$ in a column sequence number set $\mathbf{I}_{pilot}^{(r_d)}$ corresponding to the $(r_d)^{th}$ Gaussian envelope. otherwise, the network device does not store the column sequence number $t_{\min}^{(i_e)}$. For example, $i_e$ = 1, and $\mathbf{e}(1)=\frac{1}{2}$. If the first $\overline{\mathbf{\Gamma}}_{bf}^{(descend)}(r_d,1)$ is less than the energy scale $\mathbf{e}(1)=\frac{1}{2}$, an amplitude value that is in the $G_{\max}^{(r_d)}$ amplitude values and that is closest to $\frac{1}{2}$ is determined, that is, $\left[\left|\overline{\mathbf{\Gamma}}_{bf}^{(descend)}\left(r_d,1:G_{\max}^{(r_d)}\right)-\frac{1}{2}\right|\right]_{\min}$. The network device uses a sampling moment corresponding to a column sequence number $t_{\min}^{(1)}$ of the amplitude value as a resource unit of the reference signal resource. For example, the network device may store the column sequence number $t_{\min}^{(1)}$ in the column

sequence number set $\mathbf{I}_{pilot}^{(r_d)}$ corresponding to the $(r_d)^{th}$ Gaussian envelope.

In $L_{slot} - G_{\max}^{(r_d)}$ amplitude values in the column sequence number range $\left[G_{\max}^{(r_d)}+1, L_{slot}\right]$, for each energy scale $\mathbf{e}(i_d)=\frac{1}{2^{i_d}}$, where $i_e$ = 1, 2, ..., or $N_e$, if the last (an amplitude value whose column sequence number is $L_{slot}$) $\overline{\mathbf{\Gamma}}_{bf}^{(descend)}(r_d, L_{slot})$ is less than the energy scale $\mathbf{e}(i_e)$, an amplitude value that is in the $L_{slot} - G_{\max}^{(r_d)}$ amplitude values and that is closest to a value of e(i) is determined, that is, a sampling moment corresponding to the column sequence number $t_{\min}^{(i_e)}$ of $\left[\left|\overline{\mathbf{\Gamma}}_{bf}^{(descend)}\left(r_d, G_{\max}^{(r_d)}+1:L_{slot}\right)-\mathbf{e}(i_e)\right|\right]_{\min}$ in $\overline{\mathbf{\Gamma}}_{bf}^{(descend)}$ is used as a resource unit of the reference signal resource and is stored in $\mathbf{I}_{pilot}^{(r_d)}$. If the last (an amplitude value whose column sequence number is $L_{slot}$) $\overline{\mathbf{\Gamma}}_{bf}^{(descend)}(r_d, L_{slot})$ ) is greater than or equal to the energy scale $\mathbf{e}(i_e)$, the sampling moment is not stored.

The network device may obtain, by performing the foregoing operations and based on $N_e$ pieces of energy scale information and the basis function set, the column sequence number set corresponding to the resource element of the reference signal resource corresponding to each Gaussian envelope complex sine function $r_d$, that is, $\mathbf{I}_{pilot}^{(r_d)}$, $r_d = 1, 2, \cdots, N_{iterate}$.

In an optional implementation, to control resource overheads of the reference signal resource, the resource units of the reference signal resource determined in the foregoing manner may be screened based on the priority of the Gaussian envelope complex sine function corresponding to each column sequence number set and minimum interval information of the reference signal resource elements, to obtain a resource element finally included in the reference signal resource.

The network device may use a column sequence number set corresponding to a Gaussian envelope complex sine function with a highest priority as a reference set, and traverse resource elements corresponding to column sequence numbers in the column sequence number set corresponding to another Gaussian envelope complex sine function, to obtain a final column sequence number set corresponding to a resource element finally included in the reference signal resource. In this way, an interval between two resource elements corresponding to any two column sequence numbers in the final column sequence number set is greater than a minimum interval.

For example, the network device defines a column sequence number set $\mathbf{I}_{pilot}^{Final}$. The column sequence number set $\mathbf{I}_{pilot}^{Final}$ includes a column sequence number set corresponding to a Gaussian envelope complex sine function with a highest priority, that is, a column sequence number set $\mathbf{I}_{pilot}^{(1)}$ corresponding to a Gaussian envelope complex sine function of a first row vector (that is, $r_d$ = 1) in $\overline{\mathbf{\Gamma}}_{bf}^{(descend)}$. The network device traverses, based on a minimum interval $T_{\min}$ between the column sequence number set $\mathbf{I}_{pilot}^{Final}$ and a resource element and in descending order of priorities of Gaussian envelope complex sine functions, resource elements corresponding to all functions, that is, sequentially traverses, in descending order of values of $r_d$ (to be specific, the values of $r_d$ are sequentially 2, ..., and $N_{iterate}$), resource elements corresponding to each column sequence number in a corresponding column sequence number set. An element $t_{r_d} \in \mathbf{I}_{pilot}^{(r_d)}$ in $\mathbf{I}_{pilot}^{(r_d)}$ is used as an example. When an interval between a resource element corresponding to $t_{rd}$ and a resource element corresponding to each column sequence number in $\mathbf{I}_{pilot}^{Final}$ is greater than $T_{min}$, $t_{rd}$ is stored in $\mathbf{I}_{pilot}^{Final}$. When an interval between a resource element corresponding to $t_{rd}$ and a resource element corresponding to each column

sequence number in $\mathrm{I}_{pilot}^{Final}$ is less than or equal to $T_{min}$, $t_{rd}$ is not stored in $\mathrm{I}_{pilot}^{Final}$. After each column sequence number set is traversed, the obtained column sequence number set $\mathrm{I}_{pilot}^{Final}$ is the final column sequence number set corresponding to the reference signal resource.

The network device may determine the minimum interval $T_{\min}$ between the resource elements based on a reference signal resource overhead requirement, or the minimum interval may be predefined. This is not limited in this application.

It should be understood that, that the network device screens the resource elements in the reference signal resource based on the minimum interval between the resource elements is an optional implementation of the solution provided in this application. During specific implementation, to obtain channel information with higher precision, the resource elements may alternatively not be screened. In this case, the network device may not prioritize the basis functions in the basis function set. For example, after each row of the basis function set $\Gamma_{bf}$ is normalized by using a maximum value in the row, and after amplitude values of two parts of column sequence number ranges of each row are compared with energy scales, the reference signal resource is determined. That is, $\mathrm{I}_{pilot}^{Final}$ includes $\mathrm{I}_{pilot}^{(r_d)}$, where $r_d = 1, 2, ...,$ or $N_{iterate}$. This is not limited in this application.

After the network device determines the basis function set representing the channel between the network device and the target terminal device, the network device may send second information to the target terminal device. The second information indicates the basis function set. For example, the second information may indicate a parameter of each basis function in the basis function set. For example, parameters of the basis function $r_d$ include an attenuation coefficient $\overline{\alpha}_{rd}$, a time center $\overline{T}_{rd}$, and a frequency center $\overline{\Omega}_{rd}$. An indication manner of the second information is not limited in this application. The second information may indicate an identifier of each parameter, a value of each parameter, or the like. Alternatively, the second information may indicate, in a predefined candidate basis function set, an identifier of a basis function in the basis function set representing the channel between the network device and the target terminal device in the candidate basis function set. The target terminal device may determine each basis function, to be specific, a parameter of each basis function, based on the second information. The network device and the terminal device may reach, by using the second information, a consensus on the basis function set representing the channel between the network device and the target terminal device.

In addition, the network device further sends first information to the terminal device, where the first information indicates the $N_e$ pieces of energy scale information, so that after the terminal device receives the first information, the terminal device and the network device reach a consensus on the $N_e$ pieces of energy scale information.

If the network device further screens the resource elements in the reference signal resource based on the minimum interval $T_{\min}$, the network device may indicate the minimum interval $T_{\min}$ to the target terminal device, or the network device and the terminal device screen the resource elements based on the predefined minimum interval $T_{\min}$ by default. In this case, the terminal device may determine the reference signal resource by obtaining the basis function set and the $N_e$ pieces of energy scale information. Then, the terminal device screens the resource elements in the reference signal resource based on the minimum interval $T_{\min}$ to obtain the final reference signal resource.

If the network device does not screen the resource elements in the reference signal resource based on the minimum interval $T_{\min}$, the terminal device may alternatively not perform screening based on the minimum interval $T_{\min}$ by default, so that the reference signal resource, that is, the final reference signal resource, may be determined based on the basis function set and the $N_e$ pieces of energy scale information.

It should be understood that a manner in which the network device indicates the $N_e$ pieces of energy scale information and the minimum interval $T_{\min}$ is not limited in this application.

Because the network device and the terminal device can reach a consensus on the basis function set and the $N_e$ pieces of energy scale information (or including the minimum interval $T_{\min}$), and determine the reference signal resource in a same manner, the reference signal resources determined by the network device and the terminal device are the same, so that the network device and the terminal device reach a consensus on the reference signal resource.

The network device may send the reference signal to the terminal device on the reference signal resource, and the terminal device receives the reference signal on the reference signal resource.

The target terminal device determines channel information based on the reference signal. A $c^{th}$ sub-carrier is used as an example. An adaptive extension coefficient corresponding to $\left|\mathrm{I}_{pilot}^{Final}\right|$ resource elements corresponding to a reference signal of the $c^{th}$ sub-carrier is denoted as $\mathbf{c}_c \in \mathbb{C}^{1\times\left|\mathrm{I}_{pilot}^{Final}\right|}$, where $\left|\mathrm{I}_{pilot}^{Final}\right|$ represents a quantity of elements

included in $\mathrm{I}_{pilot}^{Final}$. Therefore, in practice, an adaptive extension coefficient of a channel frequency response $\mathbf{H}_c$ corresponding to the sub-carrier may be denoted as follows:

$$\mathbf{c}_c\tilde{\mathbf{\Gamma}}_{bf} = \mathbf{H}_c + \mathbf{n}_c \ \mathbf{c}_c\tilde{\mathbf{\Gamma}}_{bf} = \mathbf{H}_c + \mathbf{n}_c$$

$\tilde{\mathbf{\Gamma}}_{bf} \in \mathbb{C}^{N_{iterate} \times \left|\mathrm{I}_{pilot}^{Final}\right|}$ is a sub-matrix of the basis function set $\mathbf{\Gamma}_{bf}$. $\tilde{\mathbf{\Gamma}}_{bf}$ is a matrix that includes $N_{iterate}$ rows and $\left|\mathrm{I}_{pilot}^{Final}\right|$ columns and that is obtained by the network device by sequentially extracting, based on a column sequence number included in $\mathrm{I}_{pilot}^{Final}$, column vectors corresponding to column sequence numbers in $\mathbf{\Gamma}_{bf}$. The channel frequency response between the target terminal device and the network device is denoted as **H.** In this case, $\mathbf{H}_c$ is the $c^{th}$ row of **H**, denoted as $\mathbf{H}_c = \mathbf{H}(c,:)$. $\mathbf{n}_c$ is a zero-mean complex additive white Gaussian noise vector. According to a least square (least square, LS) method, the target terminal device obtains that an estimated value $\hat{\mathbf{c}}_c$ of $\mathbf{c}_c$ meets the following formula:

$$\hat{\mathbf{c}}_c = \mathbf{H}_c \tilde{\mathbf{\Gamma}}_{bf}^{\mathrm{H}} \left( \tilde{\mathbf{\Gamma}}_{bf} \tilde{\mathbf{\Gamma}}_{bf}^{\mathrm{H}} \right)^{-1}$$

Therefore, the estimated value of $\mathbf{H}_c$ is $\hat{\mathbf{H}}_c = \hat{\mathbf{c}}_c\mathbf{\Gamma}_{bf}$. $\tilde{\mathbf{\Gamma}}_{bf}^{\mathrm{H}}$ is a conjugate transpose of $\tilde{\mathbf{\Gamma}}_{bf}$. $\left( \tilde{\mathbf{\Gamma}}_{bf} \tilde{\mathbf{\Gamma}}_{bf}^{\mathrm{H}} \right)^{-1}$ is an inverse matrix of $\tilde{\mathbf{\Gamma}}_{bf} \tilde{\mathbf{\Gamma}}_{bf}^{\mathrm{H}}$.

According to the foregoing solution, compared with a conventional fixed configuration of even reference signal resources, the first communication apparatus may fit a channel characteristic based on prior information, and flexibly determine, based on information such as locations and/or speeds of different communication apparatuses, a distribution of reference signals used for channel estimation between the first communication apparatus and the communication apparatus, so that channel estimation precision and resource utilization can be improved, and channel estimation in a relatively high-precision mobility scenario can be implemented by using relatively proper reference signal resource overheads matching an environment. In addition, reference signal resources determined by using the foregoing solution in this application may be unevenly distributed. Communication apparatuses the first communication apparatus and the second communication apparatus may determine a reference signal resource in a same manner by exchanging channel characteristic information and energy scale information to reach a consensus on the reference signal resource, implementing high-precision and efficient channel estimation.

It may be understood that to implement functions in the foregoing embodiments, a base station and a terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on specific application scenarios and design constraints of the technical solutions.

FIG. 6 and FIG. 7 are diagrams of structures of possible communication apparatuses according to embodiments of this application. The communication apparatuses may be configured to implement functions of the first communication apparatus or the second communication apparatus in the foregoing method embodiments, and therefore can further implement beneficial effects of the foregoing method embodiments. In embodiments of this application, the communication apparatus may be one of the terminal devices 120a to 120g shown in FIG. 1, or may be the network device 110a or 110b shown in FIG. 1, or may be a module (for example, a chip) used in a terminal device or a network device.

A communication apparatus 600 includes a transceiver unit 620, and the transceiver unit 620 may be configured to receive or send information. The communication apparatus 600 may further include a processing unit 610, and the processing unit 610 may be configured to process instructions or data to implement corresponding operations.

It should be understood that when the communication apparatus 600 is a chip configured in (or used in) a communication device, the transceiver unit 620 in the communication apparatus 600 may be an input/output interface or a circuit of the chip, and the processing unit 610 in the communication apparatus 600 may be a processor in the chip.

Optionally, the communication apparatus 600 may further include a storage unit. The storage unit may be configured to store instructions or data. The processing unit 610 may execute the instructions or the data stored in the

storage unit, so that the communication apparatus implements corresponding operations.

The communication apparatus 600 may be configured to implement the first communication apparatus in the method embodiment shown in FIG. 3. When the communication apparatus 600 is configured to implement the functions of the first communication apparatus in the method embodiment shown in FIG. 3, the processing unit 610 is configured to determine a reference signal resource based on at least one piece of channel characteristic information and at least one piece of energy scale information, where the at least one piece of channel characteristic information represents a channel between the first communication apparatus and a second communication apparatus, any piece of channel characteristic information indicates a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit. The transceiver unit 620 is configured to send first information to the second communication apparatus, where the first information includes the at least one piece of energy scale information. The transceiver unit 62 is further configured to: send a reference signal to the second communication apparatus, or receive, by the first communication apparatus, a reference signal from the second communication apparatus, where the reference signal is carried on the reference signal resource.

The communication apparatus 600 may be configured to implement the second communication apparatus in the method embodiment shown in FIG. 3. When the communication apparatus 600 may be configured to implement functions of the second communication apparatus in the method embodiment shown in FIG. 3, the transceiver unit 620 is configured to receive first information from the first communication apparatus, where the first information includes at least one piece of energy scale information. The processing unit 610 is configured to determine a reference signal resource based on at least one piece of channel characteristic information and the at least one piece of energy scale information, where the at least one piece of channel characteristic information represents a channel between the first communication apparatus and a second communication apparatus, any piece of channel characteristic information represents a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit. The transceiver unit 620 is further configured to: receive a reference signal from the first communication apparatus, or send, by the second communication apparatus, a reference signal to the first communication apparatus, where the reference signal is carried on the reference signal resource.

For more detailed descriptions of the processing unit 610 and the transceiver unit 620, refer to related descriptions in the method embodiment shown in FIG. 3.

It should be understood that the transceiver unit 620 in the communication apparatus 600 may be implemented through a communication interface (for example, a transceiver, a transceiver circuit, an input/output interface, or a pin). When the communication interface is the transceiver, the transceiver may include a receiver and/or a transmitter. The processing unit 610 in the communication apparatus 600 may be implemented by using at least one processor, or the processing unit 610 in the communication apparatus 600 may be implemented by using at least one logic circuit. Optionally, the communication apparatus 600 further includes the storage unit, and the storage unit may be implemented by using a memory.

When the communication apparatus is a module used in the network device, the module in the network device implements a function of the network device in the foregoing method embodiment. The module in the network device receives information from another module (for example, a radio frequency module or an antenna) in the network device, where the information is sent by the terminal to the network device; or the module in the network device sends information to another module (for example, a radio frequency module or an antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, store input data required by the processor 710 to run the instructions, or store data generated after the processor 710 runs the instructions.

When the communication apparatus 700 is configured to implement the method shown in FIG. 7, the processor 710 is configured to implement a function of the processing unit 610, and the interface circuit 720 is configured to implement a function of the transceiver unit 620.

When the communication apparatus is a chip used in a terminal device, the chip may implement a function of the second communication apparatus in the foregoing method embodiment. The chip receives information from another module (for example, a radio frequency module or an antenna) in the terminal device, where the information is sent by a network device to the terminal device; or the chip sends information to another module (for example, a radio frequency

module or an antenna) in the terminal device, where the information is sent by the terminal device to a network device.

When the communication apparatus is a module used in a network device, the module may implement a function of the first communication apparatus in the foregoing method embodiment. The module receives information from another module (for example, a radio frequency module or an antenna) in the network device, where the information is sent by the terminal device to the network device; or the module sends information to another module (for example, a radio frequency module or an antenna) in the terminal device, where the information is sent by the network device to the terminal device.

It may be understood that the processor in this embodiment of this application may be a central processing unit (Central Processing Unit, CPU), or may be another general-purpose processor, a digital signal processor (Digital Signal Processor, DSP), an application-specific integrated circuit (network device Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. An example storage medium is coupled to the processor, so that the processor can read information from the storage medium and write information into the storage medium. The storage medium may alternatively be a component of the processor. The processor and the storage medium may be located in an ASIC. In addition, the ASIC may be located in an access network device or a terminal device. The processor and the storage medium may alternatively exist as discrete components in the access network device or the terminal device.

According to the method provided in embodiments of this application, an embodiment of this application further provides a computer program product. The computer program product includes computer program code. When the computer program code is executed by one or more processors, an apparatus including the processor is enabled to perform the method shown in FIG. 3.

All or some of the foregoing embodiments may be implemented by using software, hardware, firmware, or any combination thereof. When implemented by using software, all or some of embodiments may be implemented in a form of a computer program product. The computer program product includes one or more computer programs or instructions. When the computer programs or the instructions are loaded and executed on a computer, all or some of the procedures or functions described in embodiments of this application are performed. The computer may be a general-purpose computer, a dedicated computer, a computer network, a network device, user equipment, or another programmable apparatus.

According to the method provided in embodiments of this application, an embodiment of this application further provides a computer-readable storage medium. The computer-readable storage medium stores the foregoing computer program or instructions. When the computer program or the instructions are run by one or more processors, an apparatus including the processor is enabled to perform the method shown in FIG. 3.

The computer program or the instructions may be stored in the computer-readable storage medium, or may be transmitted from one computer-readable storage medium to another computer-readable storage medium. For example, the computer program or the instructions may be transmitted from one website, computer, server, or data center to another website, computer, server, or data center in a wired or wireless manner. The computer-readable storage medium may be any usable medium that can be accessed by the computer, or a data storage device such as a server or a data center integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state disk. The computer-readable storage medium may be a volatile or non-volatile storage medium, or may include two types of storage media: a volatile storage medium and a non-volatile storage medium.

According to the method provided in embodiments of this application, an embodiment of this application further provides a communication system that includes the foregoing one or more first communication apparatuses. The system may further include the foregoing one or more second communication apparatuses.

In several embodiments provided in this application, it should be understood that the disclosed system, apparatus, and method may be implemented in other manners. For example, the described apparatus is merely an example. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position, or may be distributed on a plurality of network units. Some or

all of the units may be selected based on actual requirements to achieve the objectives of the solutions.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A reference signal transmission method, comprising:

determining, by a first communication apparatus, a reference signal resource based on at least one piece of channel characteristic information and at least one piece of energy scale information, wherein the at least one piece of channel characteristic information represents a channel between the first communication apparatus and a second communication apparatus, any piece of channel characteristic information indicates a correspondence between an energy component of the channel and a transmission resource, the reference signal resource comprises a plurality of resource units in the transmission resource, and energy indicated by one or more pieces of energy scale information in correspondences indicated by one or more pieces of channel characteristic information corresponds to one resource unit;
sending, by the first communication apparatus, first information to the second communication apparatus, wherein the first information indicates the at least one piece of energy scale information; and
sending, by the first communication apparatus, a reference signal to the second communication apparatus, or receiving, by the first communication apparatus, a reference signal from the second communication apparatus, wherein the reference signal is carried on the reference signal resource.

**2.** The method according to claim 1, wherein the transmission resource is a time domain resource and/or a frequency domain resource.

**3.** The method according to claim 1 or 2, wherein determining, by the first communication apparatus, the reference signal resource based on the at least one piece of channel characteristic information and the at least one piece of energy scale information comprises:

determining, by the first communication apparatus, the reference signal resource based on the at least one piece of channel characteristic information, the at least one piece of energy scale information, and minimum resource interval information, wherein
an interval between any two resource units in the reference signal resource is greater than or equal to an interval indicated by the minimum resource interval information.

**4.** The method according to claim 3, wherein the minimum resource interval information is predefined or is determined by the first communication apparatus.

**5.** The method according to any one of claims 1 to 4, further comprising:
sending, by the first communication apparatus, second information to the second communication apparatus, wherein the second information indicates the at least one piece of channel characteristic information.

**6.** The method according to any one of claims 1 to 5, wherein the channel characteristic information indicates information about a basis function representing the correspondence, and the information about the basis function comprises one or more of the following information:
an identifier of the basis function, function type information of the basis function, resource information corresponding to maximum energy in the correspondence represented by the basis function, frequency information of the basis function, or fading characteristic information of the basis function.

**7.** The method according to any one of claims 1 to 6, further comprising:

receiving, by the first communication apparatus, third information from the second communication apparatus,

wherein the third information indicates one or more of a location, a speed, or a moving direction of the second communication apparatus; and
determining, by the first communication apparatus, the at least one piece of channel characteristic information based on the third information.

**8.** The method according to any one of claims 1 to 7, further comprising:
determining, by the first communication apparatus, a candidate channel characteristic information set based on one or more of channel state information between a plurality of communication apparatuses and the first communication apparatus, and location information, speed information, or moving direction information of the plurality of communication apparatuses, wherein the candidate channel characteristic information set comprises the at least one piece of channel characteristic information.

**9.** The method according to any one of claims 1 to 8, wherein the transmission resource comprises a time domain resource, the channel comprises at least one transmission path, and one piece of channel characteristic information indicates a correspondence between an energy component of the channel in the transmission path and a time resource.

**10.** A reference signal transmission method, comprising:

receiving, by a second communication apparatus, first information from a first communication apparatus, wherein the first information indicates at least one piece of energy scale information;
determining, by the second communication apparatus, a reference signal resource based on at least one piece of channel characteristic information and the at least one piece of energy scale information, wherein the at least one piece of channel characteristic information represents a channel between the first communication apparatus and the second communication apparatus, any piece of channel characteristic information represents a correspondence between an energy component of the channel and a transmission resource, the reference signal resource comprises a plurality of resource units in the transmission resource, and energy indicated by one or more pieces of energy scale information in correspondences indicated by one or more pieces of channel characteristic information corresponds to one resource unit; and
receiving, by the second communication apparatus, a reference signal from the first communication apparatus, or sending, by the second communication apparatus, a reference signal to the first communication apparatus, wherein the reference signal is carried on the reference signal resource.

**11.** The method according to claim 10, wherein the transmission resource is a time domain resource and/or a frequency domain resource.

**12.** The method according to claim 10 or 11, wherein determining, by the second communication apparatus, the reference signal resource based on the at least one piece of channel characteristic information and the at least one piece of energy scale information comprises:

determining, by the second communication apparatus, the reference signal resource based on the at least one piece of channel characteristic information, the at least one piece of energy scale information, and minimum resource interval information, wherein
an interval between any two resources in the reference signal resource is greater than or equal to an interval indicated by the minimum resource interval information.

**13.** The method according to claim 12, wherein the minimum resource interval information is predefined or is obtained from the first communication apparatus.

**14.** The method according to any one of claims 10 to 13, further comprising:
receiving, by the second communication apparatus, second information from the first communication apparatus, wherein the second information indicates the at least one piece of channel characteristic information.

**15.** The method according to any one of claims 10 to 14, wherein the channel characteristic information indicates information about a basis function representing the correspondence, and the information about the basis function comprises one or more of the following information:
an identifier of the basis function, function type information of the basis function, resource information corresponding to maximum energy in the correspondence represented by the basis function, frequency information of the basis

function, or fading characteristic information of the basis function.

**16.** The method according to any one of claims 10 to 15, further comprising:

determining, by the second communication apparatus, channel state feature information based on the reference signal, wherein the channel state feature information indicates a state of the channel corresponding to the reference signal; and
determining, by the second communication apparatus, channel information based on the channel state feature information and the at least one piece of channel characteristic information.

**17.** The method according to any one of claims 10 to 16, further comprising:
sending, by the second communication apparatus, third information to the first communication apparatus, wherein the third information indicates one or more of a location, a speed, or a moving direction of the second communication apparatus, and the third information is used to determine the at least one piece of channel characteristic information.

**18.** The method according to any one of claims 10 to 17, wherein the transmission resource comprises a time domain resource, the channel comprises at least one transmission path, and one piece of channel characteristic information indicates a correspondence between an energy component of the channel in the transmission path and a time resource.

**19.** A reference signal transmission apparatus, comprising:

a processing unit, configured to determine a reference signal resource based on at least one piece of channel characteristic information and at least one piece of energy scale information, wherein the at least one piece of channel characteristic information represents a channel between a first communication apparatus and a second communication apparatus, any piece of channel characteristic information indicates a correspondence between an energy component of the channel and a transmission resource, the reference signal resource comprises a plurality of resource units in the transmission resource, and energy indicated by one or more pieces of energy scale information in correspondences indicated by one or more pieces of channel characteristic information corresponds to one resource unit; and
a transceiver unit, configured to send first information to the second communication apparatus, wherein the first information indicates the at least one piece of energy scale information; and
the transceiver unit is further configured to: send a reference signal to the second communication apparatus, or receive, by the first communication apparatus, a reference signal from the second communication apparatus, wherein the reference signal is carried on the reference signal resource.

**20.** The apparatus according to claim 19, wherein the transmission resource is a time domain resource and/or a frequency domain resource.

**21.** The apparatus according to claim 19 or 20, wherein the processing unit is specifically configured to determine the reference signal resource based on the at least one piece of channel characteristic information, the at least one piece of energy scale information, and minimum resource interval information; and
an interval between any two resource units in the reference signal resource is greater than or equal to an interval indicated by the minimum resource interval information.

**22.** The apparatus according to claim 21, wherein the minimum resource interval information is predefined or is determined by the first communication apparatus.

**23.** The apparatus according to any one of claims 19 to 22, wherein
the transceiver unit is further configured to send second information to the second communication apparatus, wherein the second information indicates the at least one piece of channel characteristic information.

**24.** The apparatus according to any one of claims 19 to 23, wherein the channel characteristic information indicates information about a basis function representing the correspondence, and the information about the basis function comprises one or more of the following information:
an identifier of the basis function, function type information of the basis function, resource information corresponding to maximum energy in the correspondence represented by the basis function, frequency information of the basis function, or fading characteristic information of the basis function.

**25.** The apparatus according to any one of claims 19 to 24, wherein

the transceiver unit is further configured to receive third information from the second communication apparatus, wherein the third information indicates one or more of a location, a speed, or a moving direction of the second communication apparatus; and
the processing unit is further configured to determine the at least one piece of channel characteristic information based on the third information.

**26.** The apparatus according to any one of claims 19 to 25, wherein
the processing unit is further configured to determine a candidate channel characteristic information set based on one or more of channel state information between a plurality of communication apparatuses and the first communication apparatus, and location information, speed information, or moving direction information of the plurality of communication apparatuses, wherein the candidate channel characteristic information set comprises the at least one piece of channel characteristic information.

**27.** The apparatus according to any one of claims 19 to 26, wherein the transmission resource comprises a time domain resource, the channel comprises at least one transmission path, and one piece of channel characteristic information indicates a correspondence between an energy component of the channel in the transmission path and a time resource.

**28.** A reference signal transmission apparatus, comprising:

a transceiver unit, configured to receive first information from a first communication apparatus, wherein the first information indicates at least one piece of energy scale information; and
a processing unit, configured to determine a reference signal resource based on at least one piece of channel characteristic information and the at least one piece of energy scale information, wherein the at least one piece of channel characteristic information represents a channel between the first communication apparatus and a second communication apparatus, any piece of channel characteristic information represents a correspondence between an energy component of the channel and a transmission resource, the reference signal resource comprises a plurality of resource units in the transmission resource, and energy indicated by one or more pieces of energy scale information in correspondences indicated by one or more pieces of channel characteristic information corresponds to one resource unit; and
the transceiver unit is further configured to: receive a reference signal from the first communication apparatus, or send, by the second communication apparatus, a reference signal to the first communication apparatus, wherein the reference signal is carried on the reference signal resource.

**29.** The apparatus according to claim 28, wherein the transmission resource is a time domain resource and/or a frequency domain resource.

**30.** The apparatus according to claim 28 or 29, wherein the processing unit is further configured to determine the reference signal resource based on the at least one piece of channel characteristic information, the at least one piece of energy scale information, and minimum resource interval information; and
an interval between any two resources in the reference signal resource is greater than or equal to an interval indicated by the minimum resource interval information.

**31.** The apparatus according to claim 30, wherein the minimum resource interval information is predefined or is obtained from the first communication apparatus.

**32.** The apparatus according to any one of claims 28 to 31, wherein
the transceiver unit is further configured to receive second information from the first communication apparatus, wherein the second information indicates the at least one piece of channel characteristic information.

**33.** The apparatus according to any one of claims 28 to 32, wherein the channel characteristic information indicates information about a basis function representing the correspondence, and the information about the basis function comprises one or more of the following information:
an identifier of the basis function, function type information of the basis function, resource information corresponding to maximum energy in the correspondence represented by the basis function, frequency information of the basis function, or fading characteristic information of the basis function.

**34.** The apparatus according to any one of claims 28 to 33, wherein the processing unit is further configured to:

determine channel state feature information based on the reference signal, wherein the channel state feature information indicates a state of the channel corresponding to the reference signal; and
determine channel information based on the channel state feature information and the at least one piece of channel characteristic information.

**35.** The apparatus according to any one of claims 28 to 34, wherein
the transceiver unit is further configured to send third information to the first communication apparatus, wherein the third information indicates one or more of a location, a speed, or a moving direction of the second communication apparatus, and the third information is used to determine the at least one piece of channel characteristic information.

**36.** The apparatus according to any one of claims 28 to 35, wherein the transmission resource comprises a time domain resource, the channel comprises at least one transmission path, and one piece of channel characteristic information indicates a correspondence between an energy component of the channel in the transmission path and a time resource.

**37.** A communication apparatus, comprising at least one processor, wherein the at least one processor is configured to perform the method according to any one of claims 1 to 9, or perform the method according to any one of claims 10 to 18.

**38.** A computer-readable storage medium, comprising a computer program, wherein when the computer program runs on a computer, the computer is enabled to perform the method according to any one of claims 1 to 9, or perform the method according to any one of claims 10 to 18.

**39.** A communication apparatus, comprising at least one processor and a communication interface, wherein
the communication interface is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 9 or the method according to any one of claims 10 to 18 by using a logic circuit or by executing code instructions.

**40.** A computer program product, wherein the computer program product comprises a computer program; and when the computer program runs, a computer is enabled to perform the method according to any one of claims 1 to 18.

**41.** A communication system, comprising the communication apparatus according to any one of claims 19 to 27 and the communication apparatus according to any one of claims 28 to 36.

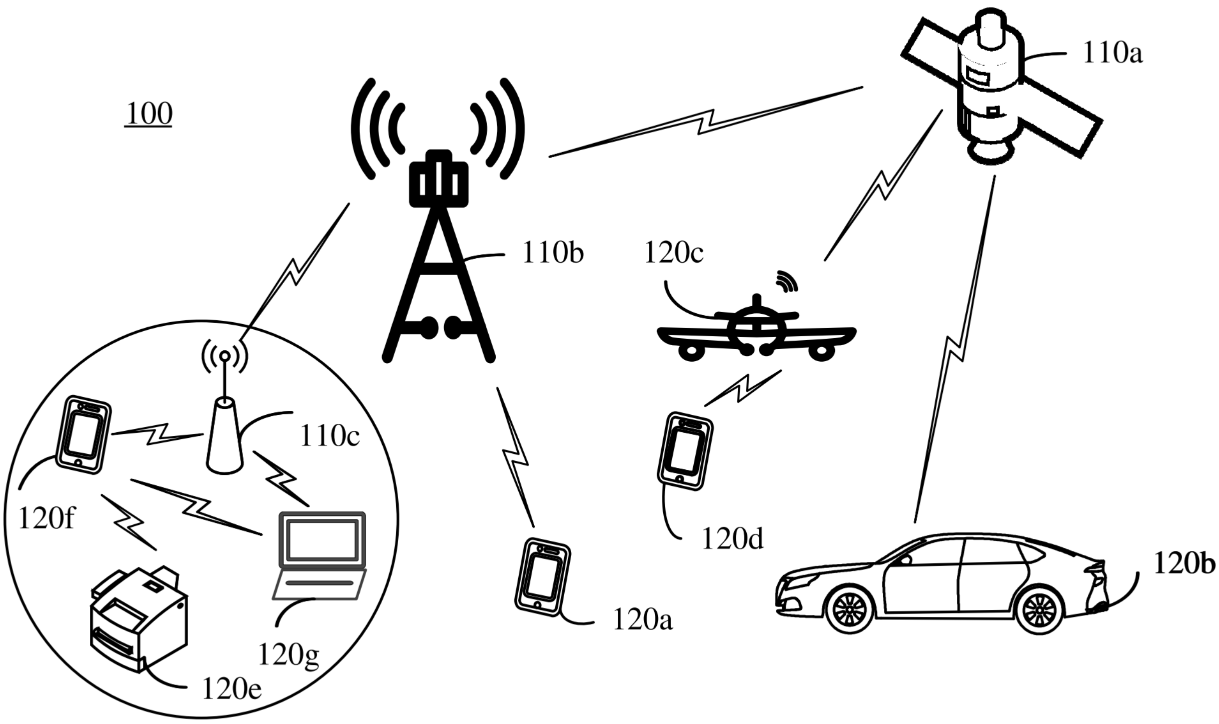
100
110a
110b
120c
110c
120f
120d
120b
120a
120g
120e

FIG. 1

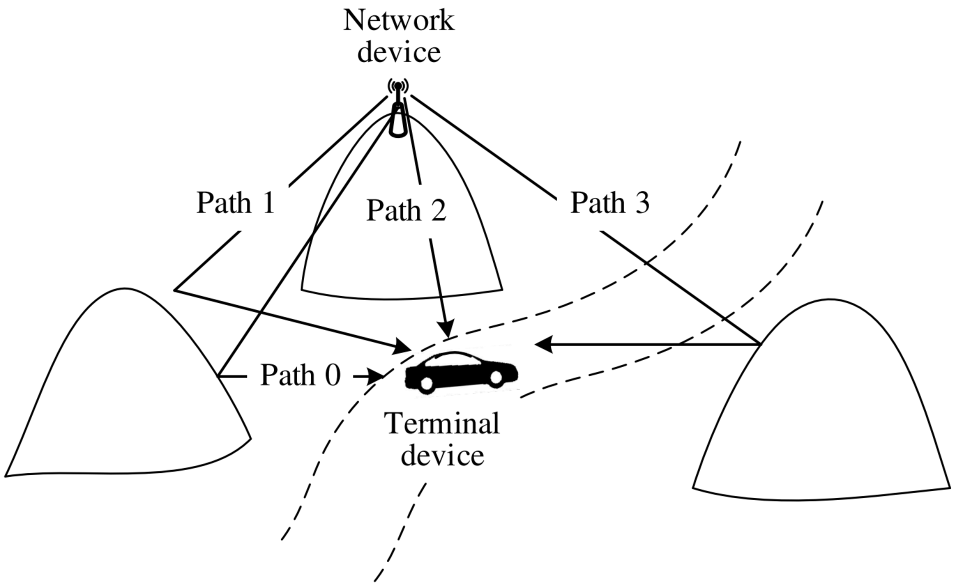
Network device
Path 1
Path 2
Path 3
Path 0
Terminal device

FIG. 2

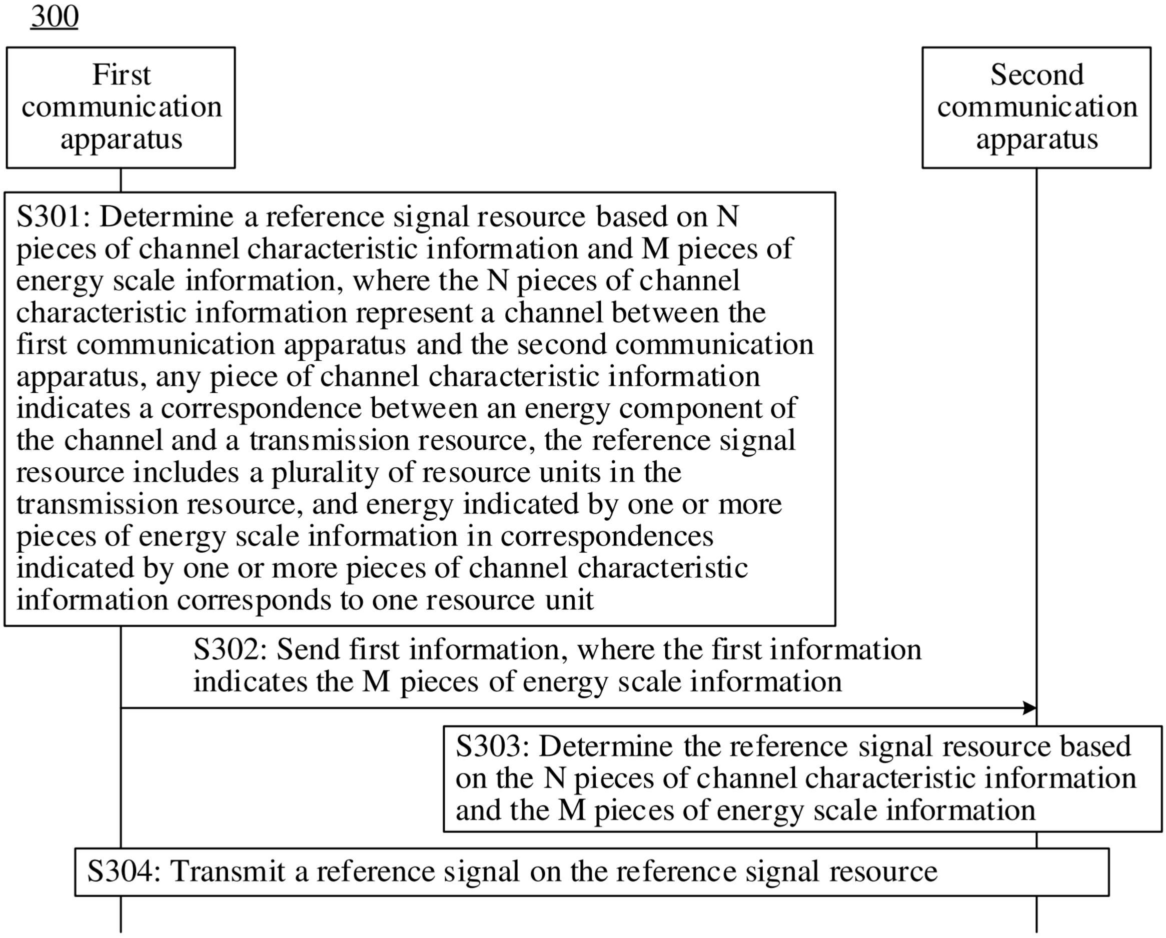
300
First communication apparatus
Second communication apparatus
S301: Determine a reference signal resource based on N pieces of channel characteristic information and M pieces of energy scale information, where the N pieces of channel characteristic information represent a channel between the first communication apparatus and the second communication apparatus, any piece of channel characteristic information indicates a correspondence between an energy component of the channel and a transmission resource, the reference signal resource includes a plurality of resource units in the transmission resource, and energy indicated by one or more pieces of energy scale information in correspondences indicated by one or more pieces of channel characteristic information corresponds to one resource unit
S302: Send first information, where the first information indicates the M pieces of energy scale information
S303: Determine the reference signal resource based on the N pieces of channel characteristic information and the M pieces of energy scale information
S304: Transmit a reference signal on the reference signal resource

FIG. 3

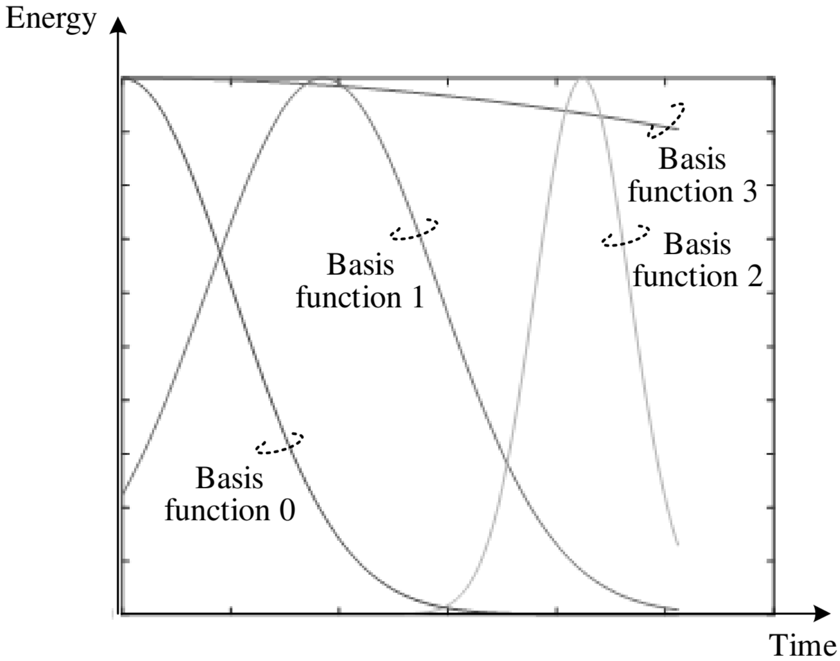
Energy
Basis function 3
Basis function 2
Basis function 1
Basis function 0
Time

FIG. 4

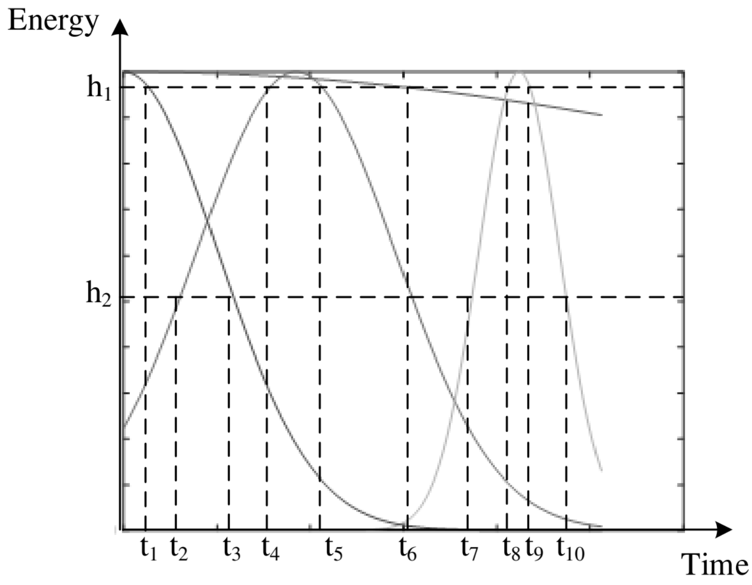


FIG. 5

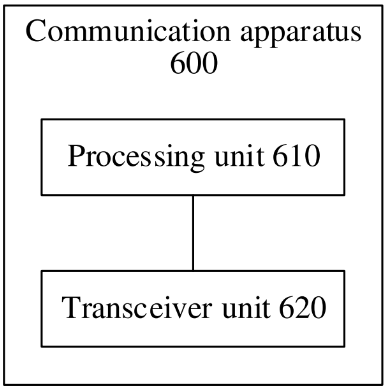


FIG. 6

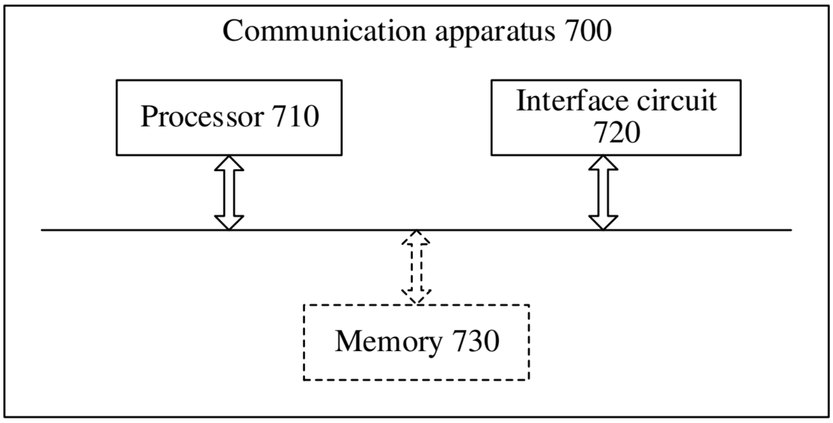


FIG. 7

## INTERNATIONAL SEARCH REPORT

International application No. **PCT/CN2023/084897**

**A. CLASSIFICATION OF SUBJECT MATTER**

H04W 72/542(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 参考信号, 调整, 动态, 对应, 分布, 分量, 灵活, 能量, 标度, 时间, 资源, 位置, 信道, 特征, channel, character, energy, EPRE, path, resource, RS, transmission, correspond, map

**C. DOCUMENTS CONSIDERED TO BE RELEVANT**

| Category* | Citation of document, with indication, where appropriate, of the relevant passages | Relevant to claim No. |
|---|---|---|
| A | CN 113541905 A (ZTE CORP.) 22 October 2021 (2021-10-22)<br>description, paragraphs [0072]-[0437] | 1-41 |
| A | CN 111901874 A (ZTE CORP.) 06 November 2020 (2020-11-06)<br>entire document | 1-41 |
| A | CN 113645707 A (COMBA NETWORK SYSTEMS CO., LTD.) 12 November 2021 (2021-11-12)<br>entire document | 1-41 |
| A | US 2022183048 A1 (QUALCOMM INC.) 09 June 2022 (2022-06-09)<br>entire document | 1-41 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2023** | **19 November 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/084897**

| Patent document cited in search report | | | Publication date (day/month/year) | Patent family member(s) | | | Publication date (day/month/year) |
|---|---|---|---|---|---|---|---|
| CN | 113541905 | A | 22 October 2021 | WO | 2019214649 | A1 | 14 November 2019 |
| CN | 111901874 | A | 06 November 2020 | WO | 2021208807 | A1 | 21 October 2021 |
| CN | 113645707 | A | 12 November 2021 | CN | 113645707 | B | 24 October 2023 |
| US | 2022183048 | A1 | 09 June 2022 | US | 11576201 | B2 | 07 February 2023 |

Form PCT/ISA/210 (patent family annex) (July 2022)